(19) Europäisches Patentamt
European Patent Office
Office européen des brevets

(11) Numéro de publication: **0 281 862 B1**

(12) # FASCICULE DE BREVET EUROPEEN

(45) Date de publication de fascicule du brevet: **20.10.93** (51) Int. Cl.$^5$: **G07B 17/02**

(21) Numéro de dépôt: **88102794.0**

(22) Date de dépôt: **25.02.88**

(54) **Système d'exploitation d'une machine à affranchir électronique.**

(30) Priorité: **27.02.87 FR 8702667**

(43) Date de publication de la demande:
**14.09.88 Bulletin 88/37**

(45) Mention de la délivrance du brevet:
**20.10.93 Bulletin 93/42**

(84) Etats contractants désignés:
**DE FR GB**

(56) Documents cités:
**EP-A- 0 133 344**
**EP-A- 0 137 336**
**EP-A- 0 147 936**
**FR-A- 2 389 185**
**GB-A- 2 130 967**
**US-A- 3 943 335**
**US-A- 4 381 505**
**US-A- 4 577 283**

(73) Titulaire: **NEOPOST INDUSTRIE**
**113 rue Jean-Marin Naudin**
**F-92220 Bagneux(FR)**

(72) Inventeur: **Vermesse, Bernard**
**2 avenue du Général de Gaulle**
**F-94240 L'Hay Les Roses(FR)**

(74) Mandataire: **Weinmiller, Jürgen et al**
**Lennéstrasse 9**
**Postfach 24**
**D-82336 Feldafing (DE)**

EP 0 281 862 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention est relative à l'exploitation d'une machine à affranchir.

Une machine à affranchir est équipée d'un moyen d'entrée de données généralement constitué par un clavier et d'un moyen de visualisation communément appelé afficheur. A l'aide du clavier l'usager compose la valeur d'affranchissement du timbre à réaliser, et les chiffres frappés apparaissent successivement sur l'afficheur en sorte que l'usager peut contrôler sa frappe. En plus de sa fonction de contrôle de frappe l'afficheur réalise deux autres fonctions qui sont :

- Une fonction d'alarme, de signalisation des défauts consistant, par exemple, à indiquer à l'usager l'épuisement de son crédit (cas des machines utilisées en prépaiement) on bien le blocage de la machine à la suite d'un constat de défaut. Généralement, ces fonctions sont réalisées à l'aide de voyants.
- Une fonction de visualisation du compteur de la machine qui cumule la valeur totale des affranchissements réalisés depuis la mise en service de la machine. En fonctionnement normal, la visualisation de l'état de ce compteur est permanente de manière à pouvoir réaliser des contrôles simples de consommation. En particulier dans le mode dit de post-paiement, l'état de ce compteur est reporté tous les jours sur la fiche mensuelle de dépôt.

Pour réaliser l'affichage, la plupart des machines à affranchir électroniques sont équipées d'un système permettant d'afficher des caractères à l'aide de 7 segments. Cette technique, bien connue, permet de visualiser correctement tous les chiffres ainsi qu'un certain nombre de lettres ou de signes qui sont plus ou moins bien représentés.

Pour aider l'usager à mieux gérer ses dépenses d'affranchissement, par exemple répartir lesdites dépenses entre plusieurs postes budgétaires, il importe d'équiper la machine à affranchir de compteurs auxilliaires. Ces compteurs, mis à la disposition de l'utilisateur, permettent de cumuler dans un période de temps donnée le nombre ou la valeur totale des affranchissements réalisés. Pour gérer les compteurs auxiliaires, il faut que l'usager puisse, pour chaque compteur pris individuellement, le nommer, le mettre en marche, à l'arrêt, à zéro, et le visualiser. Ces nouvelles possibilités sont accessibles grâce à une extension des possibilités du clavier, obtenue en équipant celui-ci de touches supplémentaires ou en autorisant l'action simultanée sur 2 ou 3 des touches existances. Par exemple, pour une machine disposant de 2 compteurs auxiliaires, un compteur "Total partiel" et un compteur "Nombre de plis", l'accès à ces compteurs est réalisé par 2 touches supplémentaires. Une action sur une de ces touches fait apparaître sur l'afficheur l'état du compteur sélectionné. Pour remettre à zéro un des compteurs auxiliaires sélectionné, une troisième touche est nécessaire. Parfois, pour ne pas rajouter de touches supplémentaires, la sélection et la remise à zéro des compteurs auxiliaires sont obtenues en agissant simultanément sur 2 touches, par exemple "1" et "Etoile" sélectionnent le compteur "Total partiel", puis "0" et "Etoile" actionnées simultanément provoquent la remise à zéro du "Total partiel" préalablement sélectionné.

Si au lieu de 2 compteurs auxiliaires, on désire offrir à l'usager plusieurs compteurs auxilaires, alors il faut soit multiplier le nombre des touches, soit généraliser la technique des doubles ou triples appuis mais, dans ce cas, un lexique accompagnant la machine devient nécessaire. L'usager doit alors se reporter constamment au lexique contenu dans la notice de fonctionnement de la machine pour sélectionner, à un instant donné, un des nombreux compteurs auxiliaires. D'autre part, il faut prévoir un accroissement des capacités d'affichage soit, par exemple, un voyant supplémentaire qui s'allume si l'état d'un compteur auxiliaire est visualisé, plus, au minimum, 2 chiffres précisant le numéro du compteur.

Par ailleurs, les inconvénients précédents se trouvent renforcés si on ajoute des fonctions supplémentaires telles que par exemple :
visualisation de la date et de l'heure, d'un dépassement de crédit, d'un nombre important de compteurs auxilaires, une vingtaine par exemple, arrêter ou mettre à zéro ou démarrer un compteur auxiliaire. Ces fonctions supplémentaires conduisent à utiliser des touches supplémentaires, de sorte que le clavier devient d'un usage lourd, mal commode, déroutant pour l'opérateur et nécessitant pour celui-ci un certain temps de formation.

Le document EP-A- 0 137 336 décrit une machine à affranchir comportant : un clavier, un afficheur, un microprocesseur, une mémoire programme et une mémoire de travail, ainsi qu'une mémoire de texte. La mémoire de texte contient un ensemble de messages à afficher pour guider l'opérateur jusqu'à la réalisation d'un affranchissement ou pour indiquer à l'opérateur des situations erronées. D'ailleurs, EP-A- 0 137 336 enseigne comme opération particulière l'entrée dans un mode de modification du texte des messages. Ce type de machine est coûteux car il comporte un clavier et un afficheur analogues à ceux d'un micro-ordinateur.

D'autre part, les systèmes de guidage et dialogue par écran sont généralement répandus dans l'état de la technique. Plus particulièrement, il existe un système d'affichage (EP-A- 0 147 936) où un message dépassant la capacité limité d'un afficheur est fractionné et affiché en plusieurs parties successivement et automatiquement, avec rebouclage à la première partie. EP-A- 0 147 936 expose aussi une touche menu pour entrer dans un "help mode" offrant plusieurs messages. Ce type de système présente l'inconvénient d'être malcommode lorsqu'il s'agit d'afficher un menu, car un utilisateur peu familiarisé avec ce menu doit regarder défiler plusieurs fois le menu, au rythme imposé par le système, avant d'être sûr d'avoir bien compris toutes les options possibles, et afin de choisir une option sans risque de se tromper.

L'invention a pour but de remédier à ces inconvénients en permettant d'introduire, dans la machine à affranchir, des fonctions supplémentaires tout en utilisant le moins de touches possible. Un autre but de l'invention est de permettre l'introduction ultérieure de nouvelles fonctions sans changer le nombre des touches utilisées.

Un autre but de l'invention est de guider l'opérateur par des messages clairs exprimés dans sa langue, de manière que l'utilisation des potentialités de la machine ne nécessite pas le recours à un lexique, ce qui évite les pertes de temps, l'opérateur n'ayant besoin que d'une formation minimum.

Ces buts sont atteints selon l'invention par la machine d'affranchissement tel que définie par la revendication 1. En ce qui concerne des caractéristiques de mises en oeuvre préférées de l'invention, référence est faite aux revendications secondaires.

L'invention sera bien comprise par la description qui va suivre d'un exemple de réalisation illustré par les figures annexées dans lesquelles :

- la figure 1 est une schéma synoptique d'une partie du circuit électronique d'une machine à affranchir de l'invention,
- la figure 2 représente un afficheur et un clavier de la figure 1,
- la figure 3 représente un partie du contenu d'une mémoire de texte de la machine à affranchir de la figure 1,
- la figure 4 représente une partie du contenu d'une mémoire de travail de la machine à affranchir de la figure 1,
- les figures 5, 6, 7, 8A, 8B, 9A, 9B, 9C sont des organigrammes relatifs à des messages,
- la figure 5 est un organigramme d'un programme d'un message MN1 vérification de la date,
- la figure 6 est un organigramme d'un sous-programme SPMP0 d'un message MP0, début du menu,
- la figure 7 est un organigramme du programme du message MP0,
- la figures 8A et 8B sont des organigrammes montrant l'enchaînement des messages d'un premier ensemble de messages,

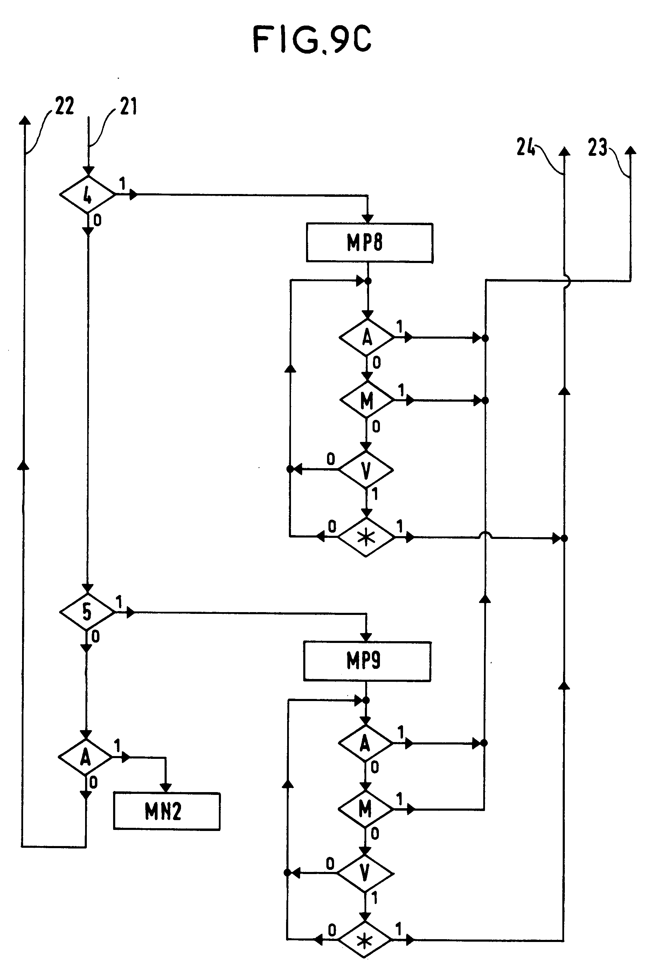

- les figures 9A, 9B, 9C, sont des organigrammes montrant l'enchaînement des messages d'un second ensemble de messages.

La figure 1 représente un schéma synoptique d'une partie du circuit électronique d'une machine à affranchir de l'invention, qui comporte un clavier 1, un afficheur 2, une horloge calendrier 3, un microprocesseur 4 avec sa mémoire programme 5, et un bus B, bidirectionnel, relié à ces divers appareils. Une machine à affranchir de l'invention comporte également une mémoire de texte 6, qui est une mémoire morte du type ROM, et une mémoire de travail 7 du type RAM, lesdites mémoires de texte et de travail étant reliées au bus B. Dans la machine à affranchir de l'invention, le clavier est équipé de seize touches, l'afficheur est à titre d'exemple, du type alphanumérique et les voyants d'alarme sont remplacés par des messages d'alerte apparaissant sur l'afficheur, accompagnés éventuellement d'une alarme sonore 8 reliée au bus B.

La figure 2 représente un ensemble afficheur-clavier équipant la machine ; le clavier 1 comporte 16 touches et l'afficheur 2 permet un affichage alphanumérique.

Les afficheurs alphanumériques actuellement disponibles permettent de visualiser une ou plusieurs lignes de 16, 20, 40 caractères alphanumériques chacune, de tels afficheurs alphanumériques sont commercialisés par exemple par les sociétés EPSON ou DENSITRON CORPORATION, et permettent de visualiser tous le caractères figurant dans le code ASCII (code N°5 du CCITT). La machine à affranchir fait apparaître clairement sur cet afficheur des messages ; l'opérateur, grâce aux touches du clavier exécute les propositions du message affiché. Grâce aux messages l'opérateur est constamment guidé.

Dans la description qui va suivre, à titre d'exemple l'afficheur permet de visualiser à un instant donné par exemple deux lignes de 16 caractères alphanumériques, et est utilisé pour transmettre des messages à l'opérateur. Un message se présente généralement sous la forme d'un texte. Lorsque le message à visualiser nécessite plus de 32 caractères, il est découpé en autant d'écran de 32 caractères qu'il est nécessaire. Autrement dit, un message peut être composé d'un ou plusieurs écrans, chaque écran correspondant à un texte utilisant la pleine capacité de l'afficheur, soit 32 caractères dans l'exemple choisi.

Tous les messages sont mémorisés dans la mémoire de texte 6, figure 1.

Chaque écran apparaît sur l'afficheur pendant un certain temps, puis il est remplacé par l'écran suivant en sorte que la suite des écrans reconstitue l'intégralité du message à visualiser. A la fin du temps d'affichage du dernier écran d'un message, apparaît le premier écran du même message. Le texte est donc bouclé et il se répète indéfiniment jusqu'à l'intervention de l'opérateur. Le défilement des écrans successifs est donc automatique ; il peut être suspendu grâce à l'utilisation du clavier. Le temps de visualisation de chaque écran est un paramètre propre à chaque écran au même titre que le texte à afficher. Par exemple un écran peut apparaître 2 secondes, le suivant 1 seconde et le troisième 3 secondes. Le temps d'apparition du texte d'un écran est fonction de l'importance qualitative de ce texte ; ce temps est fixé par un programme relatif à chaque message.

Le clavier est composé de 16 touches. On distingue :

- les 10 touches numériques marquées 0, 1...9, permettant à l'opérateur :
  1) de composer une valeur, par exemple la valeur du timbre à réaliser,
  2) de choisir, parmi les propositions numérotées fournies par le menu de la machine, la proposition à réaliser.
- une touche "ANNUL" permettant d'annuler l'action en cours. Un ou plusieurs appuis sur cette touche ramène la machine dans son état initial, c'est-à-dire l'état permettant la composition de la valeur à affranchir.
- une touche "VALID" pour valider un choix ou une valeur préalablement composée par l'opérateur à l'aide des touches numériques.
- une touche étoile "*" qui utilisée simultanément avec la touche "VALID" sert à valider un ordre changeant le fonctionnement de la machine.
- une touche menu M qui donne accès aux premières propositions du menu, qui correspondent à des opérations particulières,
- deux touches de défilement, repérées par flèche en haut et flèche en bas servant à suspendre le défilement automatique des écrans ou à faire défiler les écrans au rythme voulu par l'opérateur, les écrans se succédant dans l'ordre naturel de lecture du texte, ou dans l'ordre inverse. Si l'une des touches de défilement est enfoncée le défilement automatique des écrans est arrêté et l'écran en cours de visualisation reste affiché pendant tout le temps d'enfoncement de la touche de défilement ; lorsque l'opérateur cesse d'appuyer sur la touche de défilement flèche en bas, cela provoque l'apparition de l'écran suivant ; si au contraire l'opérateur cesse d'appuyer sur la touche de défilement flèche en haut, cela provoque l'apparition de l'écran précédent. Dans les deux cas le défilement automatique des écrans reprend cinq secondes après relâchement de la touche. Une action simultanée sur les deux touches de défilement maintient sur l'afficheur l'écran en cours de visualisation ; au relâchement des deux touches le défilement automatique reprend après cinq secondes.

A chaque instant, pour un message donnée en cours de visualisation, seules les touches utiles du clavier sont actives, ces touches utiles étant celles qui correspondent, dans le message, à des propositions ; par exemple si un message comporte cinq propositions numérotées de 1 à 5, seules les touches 1 à 5 sont actives et une action sur les autres touches reste sans action. Cependant la touche annulation reste constamment active.

Les messages, qu'ils concernent les opérations normales d'affranchissement ou les opérations particulières accessibles par la touche menu du clavier, sont commandés par le microprocesseur 4, qui déroule pour chaque message un programme relatif audit message, la mémoire programme 5 contenant tous les programmes relatifs aux messages.

La mémoire programme contient également cinq programmes spécifiques qui sont : un programme d'acquisition clavier, un programme afficheur, un programme d'acquisition de la date et de l'heure, un programme de temporisation d'écran, et un programme de commande de l'alarme sonore si la machine est équipée d'une telle alarme, chaque programme spécifique se déroulant cycliquement de manière automatique.

Le programme d'acquisition clavier consiste à créer dans la mémoire de travail 7 une image électronique des 16 touches du clavier. Dans la mémoire de travail, chaque touche est représentée par un bit dont l'état 1 correspond à la touche au repos et l'état 0 correspond à la touche enfoncée. L'ensemble des 16 touches nécessite donc 16 bits, soit 2 octets. L'image du clavier dans la mémoire de travail occupe donc un espace mémoire de 2 octets ; le contenu de cet espace mémoire est appelé "image clavier".

Pour réaliser cette fonction le microprocesseur, piloté par le programme d'acquisition clavier, prélève l'état des huit premières touches et le range dans la mémoire de travail, puis il opère de la même façon avec les huit dernières touches. Toutefois, pour supprimer les états parasités provenant des rebonds mécaniques apparaissant à l'ouverture et à la fermeture du contact de chaque touche, le programme d'acquisition ne rafraîchit effectivement l'image clavier qu'après s'être assuré que l'état des touches est parfaitement stable. Pour cela, le microprocesseur crée une image temporaire du clavier dans la mémoire de travail puis, à chaque prélèvement des contacts du clavier, compare l'état de ces contacts avec l'image temporaire.

Si l'état des contacts est différent de l'état des contacts de l'image temporaire, le microprocesseur charge alors le nouvel état des contacts dans l'image temporaire ; si l'état des contacts est identique à l'état des contacts de l'image temporaire, et si cette identité a lieu depuis au moins 50 millisecondes, le microprocesseur transfère alors l'image temporaire dans l'image clavier.

Le programme d'acquisition du clavier se déroule automatiquement toutes les 20 millisecondes. Le rangement de l'état des touches dans la mémoire de travail est représenté figure 4, l'image temporaire ITC et l'image clavier IC occupant chacune 2 octets de la mémoire de travail.

Le programme afficheur a lieu cycliquement toutes les 100 millisecondes. L'afficheur visualise le caractère qu'il reçoit à une position donnée par son curseur, que celui-ci soit visible ou invisible, puis le curseur se déplace d'une position à droite. Pour faire apparaître sur l'afficheur un texte complet de 2 lignes de chacune 16 caractères, espaces compris, il faut :

- positionner le curseur sur le premier caractère de la première ligne,
- envoyer le premier caractère, puis le deuxième, et ainsi de suite jusqu'au seizième caractère,
- positionner le curseur sur le premier caractère de la deuxième ligne,
- envoyer les seize caractères successifs de cette deuxième ligne.

Les ordres de fonctionnement du curseur font partie du programme afficheur rangé dans la mémoire programme de la machine à affranchir tandis que les 2 fois 16 caractères à visualiser sont rangés de façon consécutive dans la mémoire de travail où ils occupent un espace de 32 octets. Cet espace est réservé aux écrans à visualiser, comme cela sera explicité plus loin, et constitue une image électronique de l'afficheur.

Le programme afficheur consiste donc à prélever en mémoire de travail chaque octet de l'image afficheur et à l'envoyer à l'afficheur en intercalant les ordres de positionnement du curseur. Pour être visualisables les caractères contenus dans l'image afficheur doivent être représentés en code ASCII. L'espace réservé, dans la mémoire de travail, à l'image afficheur IA est représenté figure 4.

Le programme d'acquisition de la date et de l'heure se déroule automatiquement toutes les 100 millisecondes. L'horloge calendrier de la machine à affranchir possède une série de six compteurs respectivement incrémentés au rythme de la seconde, la minute, l'heure, du jour, du mois et de l'année. Le programme d'acquisition de la date et de l'heure consiste, pour le microprocesseur, à prélever le contenu de chacun des six compteurs et à les écrire dans la mémoire de travail dans un espace de six octets consécutifs, soit un octet par compteur ; cet espace constitue l'image de l'horloge calendrier, ladite image étant rafraîchie toutes les 100 millesecondes par le programme d'acquisition de la date et de l'heure. L'espace réservé dans la mémoire de travail à l'image horloge calendrier IHC est représenté figure 4.

Le programme de commande de l'alarme sonore se déroule automatiquement toutes les 20 millisecondes. Les machines à affranchir comportent généralement des alarmes qui sont constituées par des voyants ; parmi les opérations que l'opérateur a la possibilité d'effectuer certaines peuvent, dans certaines conditions, être interdites : par exemple impossibilité d'affranchir si la valeur du timbre demandée est supérieure à une certaine valeur, ou encore si le crédit est épuisé.

Généralement il existe un voyant différent pour chacune des conditions, d'où multiplication des voyants. Dans la machine à affranchir de l'invention les voyants sont supprimés et remplacés par des messages d'alerte apparaissant sur l'afficheur, accompagnés éventuellement d'une alarme sonore pour attirer l'attention de l'opérateur. L'alarme sonore, qui est constituée par exemple par un vibreur piézoélectrique, est modulée en fonction des évènements qui la déclenchent ; l'alarme sonore peut consister en un simple bip sonore, ou en une suite de bips sonores dont le rythme est plus ou moins rapide.

Pour commander le vibreur on dispose dans la mémoire de travail, figure 4, d'un espace de commande d'alarme sonore, CAS, comprenant trois octets :
le premier octet contient le nombre de bips sonores que l'on désire émettre,
le deuxième octet contient le temps d'émission d'un bip sonore,
le troisième octet contient le temps du silence séparant deux bips sonores.

Les deuxième et troisième octets ne contiennent pas un temps exprimé en secondes, mais un nombre, le temps correspondant étant égal à ce nombre multiplié par 20 millisecondes. Si le contenu du premier octet est égal à zéro, il n'y a pas d'émission de bip sonore ; par contre la valeur FF, en code hexadécimal, correspond à une émission permanente.

Le programme de commande de l'alarme sonore consiste à exécuter les actions suivantes :

Action 1 : si le contenu du premier octet est zéro, le programme de l'alarme sonore est terminé ; sinon passer à l'action 2 ;

Action 2 : le vibreur est activé pendant le temps spécifié dans le deuxième octet ; à la fin de ce temps passer à l'action 3 ;

Action 3 : le vibreur est désactivé pendant le temps spécifié dans le troisième octet ; à la fin de ce temps passer à l'action 4 ;

Action 4 : si le contenu du premier octet est égal à FF, recommencer l'action 1, sinon faire -1 dans le contenu du premier octet puis retourner à l'action 1.

Le programme de temporisation sert à faire apparaître chaque écran d'un message pendant un certain temps, qui peut varier d'un écran à un autre. Cette temporisation, appelée temps d'écran est rangée dans un octet TE0 de la mémoire de travail représentée figure 4. Le programme de temporisation se déroule automatiquement toutes les 20 millisecondes. Pour utiliser une temporisation il suffit de l'initialiser en chargeant l'octet de temporisation par un nombre, le temps de temporisation étant égal à ce nombre multiplié par 20 milliseconds ; pour une temporisation de 1 seconde il faut charger le nombre 50 dans l'octet de temporisation, ce qui donne bien un temps d'écran de 1 seconde. Le programme de temporisation consiste à faire -1 dans l'octet de temporisation, si le contenu de cet octet n'est pas nul ; le temps d'écran est écoulé lorsque le contenu de l'octet de temporisation et nul.

Les cinq programmes spécifiques mentionnés ci-dessus permettent une simplification des programmes relatifs aux messages et leur exécution.

Les textes visualisés sur l'afficheur comportent une partie fixe dont la source est la mémoire de texte, et une partie variable telle que : date, type de fonctionnement, valeur du timbre, du plafond, de la limite, du crédit, etc... Les textes fixes des messages contenus dans la mémoire de texte tiennent compte de l'introduction ultérieure des textes variables dans l'image afficheur IA de la mémoire de travail.

La figure 3 représente une partie du contenu de la mémoire de texte, et en particulier un message M1 découpé en deux écrans E1 et E2 de deux lignes de 16 caractères chacune, dans le cas d'un afficheur permettant de visualiser deux lignes de 16 caractères chacune. Le message M1 occupe 64 octets de la mémoire de texte numérotés de 0 à 63 ; pour l'écran E1 la première ligne E1L1 occupe les octets 0 à 15 et la deuxième ligne E1L2 occupe les octets 16 à 31. Pour l'écran E2 la première ligne E2L1 occupe les octets 32 à 47 et la deuxième ligne E2L2 occupe les octets 48 à 63. Bien entendu la mémoire de texte contient également tous les autres messages, chaque message étant lui-même découpé en un certain nombre d'écrans. Chaque message doit être formaté en fonction de la capacité de visualisation de l'afficheur.

La figure 4 représente une partie du contenu de la mémoire de travail, cette partie comprenant :

- 2 octets ITC0 et ITC1 pour l'image temporaire du clavier ITC,
- 2 octets IC0 et IC1 pour l'image clavier IC.

Dans ces quatre octets, les chiffres, lettres et signes sont ceux des 16 touches du clavier, M désignant le menu, V la validation et A l'annulation, chaque touche correspondant à un bit des octets.

- 32 octets IA0 à IA31 pour l'image afficheur IA, les octets IA0 à IA15 étant réservés à la première ligne EiL1 d'un écran Ei, les octets IA16 à IA31 étant réservés à la deuxième ligne EiL2 de l'écran Ei ; chaque octet est relatif à un caractère. Cet espace mémoire de 32 octets correspond à un afficheur de deux lignes de seize caractères. D'une manière générale l'espace mémoire constituant l'image afficheur est fonction de la capacité de l'afficheur utilisé. Dans le cas d'un afficheur de L lignes de N caractères, l'espace mémoire nécessaire à l'image afficheur utilise N.L octets, numérotés de IA0 à IA (NL-1).
- 6 octets IHC0 à IHC5 pour l'image de l'horloge calendrier IHC ; l'octet IHC0 est réservé à l'année, de 0 à 99 ; l'octet IHC1 est réservé au mois, de 1 à 12 ; l'octet IHC2 est réservé au jour, de 1 à 31 ; l'octet IHC3 est réservé à l'heure, de 0 à 23 ; l'octet IHC4 est réservé à la minute, de 0 à 59 ; l'octet IHC5 est réservé à la seconde, de 0 à 59.
- 3 octets CAS0 à CAS2 pour la commande d'alarme sonore CAS, l'octet CAS0 étant réservé au nombre de bips à émettre, l'octet CAS1 étant réservé au temps d'émission d'un bip, et l'octet CAS2 étant réservé au temps d'un silence (entre 2 bips).
- 1 octet TE0 pour la temporisation d'écran TE.
- L'image temporaire clavier ITC et l'image clavier IC ont été définies précédemment et sont rafraîchies par le programme d'acquisition clavier décrit précédemment.
- L'image afficheur IA, est un espace mémoier réservé au texte d'un écran qui est transféré de la mémoire de texte dans la mémoire de travail, où il est éventuellement complété par un texte variable, pour être visualisé sur l'afficheur ; la lecture de cet espace mémoire est effectuée par le programme afficheur.
- L'image horloge calendrier IHC est réservée aux indications de la date et de l'heure à partir des six compteurs de l'horloge calendrier ; cette image horloge calendrier est rafraîchie toutes les 100 millisecondes par le programme d'acquisition de la date de l'heure décrit précédemment.

- La lecture de l'espace mémoire des 3 octets de la commande de l'alarme sonore CAS est effectuée par le programme de commande de l'alarme sonore décrit précédemment.
- La lecture de l'octet TE0 de la temporisation d'écran est effectuée par le programme de temporisation décrit précédemment. Cette mémoire de travail contient en plus des informations qui seront détaillées ultérieurement et qu'il faut maintenir lorsque la machine est hors tension ; elle est donc sauvegardée par une pile, comme cela est bien connu.

Ces cinq programmes spécifiques, qui se déroulent automatiquement, sont utilisés avec les programmes relatifs aux différents messages pour afficher les écrans de chaque message, comme cela sera précisé plus loin lors de deux exemples de déroulement de deux programmes relatifs à deux messages.

Les messages à disposition de l'opérateur permettent soit des opérations normales d'affranchissement soit des opérations particulières accessibles par la touche menu du clavier, comme indiqué précédemment.

La description des messages qui suit se rapporte à une machine à affranchir à prépaiement ; dans le cas d'une machine à post-paiement les textes de certains messages seront modifiés.

Les messages relatifs aux opérations normales d'affranchissement constituent un premier ensemble de messages désignés ci-après par MN1, MN2,....

Les organigrammes des figures 8A et 8B représentent l'enchaînement de ces messages.

Message MN1 Vérification de la date,
Message MN2 Affranchissement ou menu
Message MN3 Composition de la valeur d'affranchissement,
Message MN4 Valeur du timbre validée, en mode coup par coup ou rafale,
Message MN5 Valeur du timbre validée, en mode rafale limitée,
Message MN6 Dépassement de crédit,
Message MN7 Dépassement de la limite d'affranchissement,
Message MN8 Dépassement du plafond de sécurité.

Les messages MN1, MN6, MN7 et MN8 sont des messages d'alerte accompagnés éventuellement d'une alarme sonore.

Ces différents messages sont décrits ci-après.

Message MN1 Vérification de la date.

Dans le cas des machines équipées d'une pose automatique de la date ce message n'existe pas et le message MN2 apparaît dès la mise sous tension de la machine.

Si la pose de la date d'oblitération de l'empreinte est obtenue par des molettes que l'opérateur doit positionner manuellement, ce message apparaît uniquement à la première mise sous tension de la journée, de la machine à affranchir. Ce message est constitué par les deux écrans suivants qui apparaîssent successivement sur l'afficheur :

**Ecran 1** **Vérifier l'état des molettes** **(1 seconde + 2 bips d'alarme)**

**Ecran 2** **Date = JJ/MM/AA puis valider** **(2 secondes)**

L'écran 1 est affiché pendant 1 seconde, et l'écran 2 pendant 2 secondes ; l'alarme est constituée par 2 bips.

Le jour, JJ, le mois, MM, et l'année, AA, sont fournis par l'horloge calendrier de la machine à affranchir. Ce message invite l'opérateur à mettre les molettes "date" à la date du jour. Cette action étant terminée l'opérateur appuie sur la touche validation. A la suite de cette validation, la machine note que l'opération "changement de date" est effectuée, et, pendant le reste de la journée, à chaque remise sous tension, le message MN1 n'apparaît plus, il est remplacé par le message MN2.

Lorsque le message MN1 est présent seule la touche validation est active. Suite à la validation par l'opérateur, le message MN2 apparaît.

Message MN2 Affranchissement ou Menu

A la suite d'une validation du message MN1, ou après une mise sous tension sans changement de date, ou encore à la suite d'une annulation le message MN2 apparaît.

Ce message est constitué par les 3 écrans suivants qui apparaîssent successivement :

| | | |
|---|---|---|
| Ecran 1 | Timbre = 0000<br>Crédit = XXXXXX | (2 secondes) |
| Ecran 2 | Composer la<br>valeur du timbre | (1 seconde) |
| Ecran 3 | Ou début MENU<br>si MENU | (1 seconde) |

Les écrans 1, 2, 3 sont affichés pendant 2, 1, 1 secondes respectivement.

Lorsque le message MN2 est présent, seules les touches numériques, de validation et Menu sont actives.

Les touches numériques permettent à l'opérateur de composer la valeur du timbre, et la touche MENU donne accès aux opérations particulières en faisant apparaître un message comportant différentes options, comme cela sera explicité plus loin. Dès qu'une touche numérique est frappée, la touche Menu devient inactive.

Le message MN2 représente l'état initial des opérations normales d'affranchissement, puisque le premier message MN1 n'apparaît qu'à la première mise sous tension de la journée. Dans l'écran 1 du message MN2, la valeur du timbre est mise à zéro par sécurité, et le crédit restant apparaît en clair.

L'opérateur ne doit pas composer une valeur de timbre supérieure au crédit restant. Dès que l'opérateur tape sur une touche numérique pour composer une valeur du timbre, le message MN3 apparaît.

Message MN3 Composition de la valeur d'affranchissement

Ce message est constitué par les deux écrans suivants :

| | | |
|---|---|---|
| Ecran 1 | Timbre = 000X | (3 secondes) |
| Ecran 2 | Composer<br>Puis valider<br>ou Annuler | (1 seconde) |

Les écrans 1 et 2 sont affichés pendant 3 et 1 secondes, respectivement.

Le premier zéro à droite de la valeur du timbre est remplacé par le premier chiffre frappé sur le clavier ; un deuxième appui sur une touche numérique décale le chiffre précédant sur l'écran 1 d'une position à gauche et le deuxième chiffre frappé occupe la position à droite. Un troisième et un quatrième chiffres peuvent être frappés par l'opérateur ; ils apparaîssent à droite de l'écran 1 après un décalage à gauche de la valeur du timbre. Chaque frappe d'un chiffre ramène automatiquement l'écran 1 sur l'afficheur, en sorte que si le temps entre deux frappes est inférieur à 3 secondes seul l'écran 1 apparaît ; l'écran 2 n'apparaît alors que 3 secondes après la frappe du dernier chiffre.

Dans le message MN3 seules les touches numériques de validation et d'annulation sont actives. En cas d'erreur sur la valeur du timbre et pour changer la valeur frappée, l'opérateur frappe sur la touche annulation, ce qui fait apparaître le message MN2 et lui permet de frapper la nouvelle valeur du timbre. Si la valeur du timbre composée est bonne l'opérateur frappe sur la touche validation, même si l'écran 2 n'est pas affiché.

Les machines à affranchir connues n'ont généralement qu'un mode de fonctionnement permettant l'affranchissement d'un nombre de plis non limité dès que l'opérateur a composé et validé une valeur de timbre, tant que le crédit n'est pas épuisé. L'invention permet trois modes de fonctionnement, le choix du mode de fonctionnement étant effectué par l'opérateur. Ces modes de fonctionnement sont :

- le mode coup par coup : après chaque affranchissement, la valeur du timbre est ramenée à zéro. Dans ce cas, il faut recomposer la valeur du timbre de l'affranchissement suivant. Ce mode de fonctionnement est une sécurité supplémentaire qui interdit la réalisation d'affranchissements successifs dont la valeur ne soit pas rigoureusement contrôlée,
- le mode rafale : après chaque affranchissement, la valeur du timbre n'est pas remise à zéro comme dans le mode précédent. La réalisation d'une suite illimitée d'affranchissements à la même valeur est alors possible, dans la limite du crédit, bien entendu.
- le mode rafale limitée : identique au mode de fonctionnement précédent, mais limité à un certain nombre N d'affranchissements préalablement chargé par l'opérateur. Lorsque le nombre N d'affranchissements demandé est réalisé, la machine repasse automatiquement dans le mode "coup à coup" ; si le crédit est épuisé avant les N affranchissements, il n'est plus possible d'affranchir.

Le choix du mode de fonctionnement est effectué par l'opérateur, comme décrit plus loin. Si le mode "coup par coup" ou "rafale" a été sélectionné par l'opérateur, la machine reste dans le mode choisi même après un arrêt et une remise en marche de la machine. Au contraire, pour le mode "rafale limitée", une coupure d'alimentation de la machine place celle-ci automatiquement en mode "coup par coup" à la prochaine mise sous tension.

Si la machine à affranchir n'est pas équipée pour changer de fonctionnement, elle fonctionne en mode rafale.

Lorsque l'opérateur valide la valeur du timbre et que celle-ci ne dépasse pas une valeur limite préalablement fixée, le message MN4 apparaît, en mode coup par coup, ou en mode rafale ; si la machine est en mode rafale limitée c'est le message MN5 qui apparaît.

Message MN4 Valeur du timbre validée, en mode coup par coup ou rafale.

Ce message est constitué par les deux écrans suivants qui apparaissent successivement :

| | | |
|---|---|---|
| **Ecran 1** | **Timbre = XXXX** | **(3 secondes)** |
| | **Crédit = XXXXXX** | |
| **Ecran 2** | **Affranchir** | **(1 seconde)** |
| | **ou Annuler** | |

Les écrans 1 et 2 sont affichés pendant 3 et 1 secondes, respectivement. Les valeurs du timbre et du crédit apparaissent en clair.

Message MN5 Valeur du timbre validée en mode rafale limitée.

Ce message est constitué par les deux écrans suivants qui apparaîssent successivement :

| | | |
|---|---|---|
| **Ecran 1** | **Timbre = XXXX** | **(3 secondes)** |
| | **Rafale de = NNN** | |
| **Ecran 2** | **Affranchir** | **(1 seconde)** |
| | **ou Annuler** | |

Les écrans 1 et 2 sont affichés pendant 3 et 1 secondes, respectivement. La valeur du timbre et le nombre de plis en rafale limitée apparaissent en clair.

Dans ces deux messages MN4 et MN5, seule la touche annulation est active.

En mode coup par coup, après passage d'une enveloppe dans la machine, le message MN4 est remplacé par le message MN2.

En mode rafale le crédit dans l'écran 1 du message MN4 est décrémenté de la valeur du timbre après chaque affranchissement et l'écran 1 reste affiché si la cadence d'affranchissement est inférieure à 3 secondes, l'écran 2 n'étant alors affiché que 3 secondes après passage de la dernière enveloppe.

En mode rafale limitée, dans l'écran 1 du message MN5 le nombre NNN qui correspond au nombre N d'enveloppes à affranchir et apparaît en clair, est décrémenté d'une unité après chaque affranchissement, et si la cadence d'affranchissement est inférieure à 3 secondes l'écran 1 reste affiché ; après passage de la dernière enveloppe le nombre NNN devient nul et le message MN2 est affiché.

En mode rafale, ou en mode rafale limitée, si le crédit est épuisé en cours d'affranchissement la machine s'arrête et le message MN6 apparaît sur l'afficheur.

Message MN6 Dépassement de crédit.

Ce message n'existe que pour les machines à affranchir à prépaiement. Ce message est constitué par les deux écrans suivants qui apparaîssent successivement.

| | | |
|---|---|---|
| Ecran 1 | Timbre XXXX | (3 secondes + bips d'alarme) |
| | Crédit épuisé | |
| Ecran 2 | Annulez | (1 seconde) |
| | votre demande | |

Si dans le message MN3 la valeur du timbre composé excède le montant du crédit restant et si l'opérateur valide cette valeur, le message MN6 apparaît.

Si la valeur d'affranchissement est limitée, lors de la mise en service, par un moyen mécanique ou électrique, à une valeur dite valeur limite, l'affranchissement à une valeur supérieure est impossible et la machine se bloque ; cette valeur limite ne peut être changée par l'opérateur. L'invention prévoit également de permettre à l'opérateur de fixer une valeur limite et une valeur plafond, de les changer s'il le désire, et du réaliser un affranchissement de valeur supérieure à la valeur plafond.

Pour cela lorsque l'opérateur valide, dans le message MN3, une valeur d'affranchissement supérieure à la valeur plafond, la validation ne permet pas l'affranchissement et un message MN8 apparaît ; l'affranchissement n'est possible que par validation du message MN8 comme cela sera précisé lors de la présentation de ce message. La validation dans le message MN3, d'une valeur supérieure à la valeur limite fait apparaître le message MN7.

Message MN7 Dépassement de la limite d'affranchissement.

La réalisation d'une empreinte, dont la valeur dépasse la limite d'affranchissement, est impossible et la machine alerte l'opérateur par une suite de bips sonores et par l'affichage du message MN7. Dans cet état la machine interdit le démarrage de la procédure d'affranchissement si l'opérateur présente une enveloppe, ou la présentation d'une enveloppe et le démarrage de la procédure d'affranchissement si la machine est automatique.

Pour réaliser un timbre dont la valeur dépasse la limite d'affranchissement l'opérateur doit changer cette limite à l'aide d'un message accessible par la touche menu et qui sera décrit ultérieurement. Si cette limite est nulle la machine est bloquée ; par contre si cette limite est égale à la capacité maximum de la machine, par exemple 9999 pour une machine à quatre chiffres, la limite d'affranchissement n'existe plus.

Le message MN7 est constitué par les trois écrans suivants qui apparaissent successivement :

| | | |
|---|---|---|
| Ecran 1 | Timbre = XXXX | (3 secondes + 4 bips sonore) |
| | vous dépassez la | |
| Ecran 2 | Limite d'affran- | (2 secondes) |
| | chissement = XXXXX | |
| Ecran 3 | Annuler | (1 seconde) |

Les écrans 1, 2, 3 sont affichés pendant 3, 2, 1 secondes, respectivement ; quatre bips sonores d'alarme sont émis pendant le temps d'affichage de l'écran 1. Les valeurs du timbre et de la limite apparaîssent en clair. L'annulation ramène au message MN2.

Message MN8 Dépassement du plafond de sécurité.

La validation dans le message MN3 d'une valeur d'affranchissement supérieure audit plafond de sécurité fait apparaître le message MN8, et l'opérateur peut alors soit annuler, soit valider la valeur d'affranchissement.

L'opérateur est maître du plafond de sécurité et la façon de charger et de changer ledit plafond de sécurité sera expliquée ultérieurement lors de la description des messages accessibles par la touche menu.

L'utilisation d'un plafond est une sécurité supplémentaire qui permet d'alerter l'opérateur lorsque la valeur du timbre composée devient excessive par rapport à l'usage habituel de la machine.

Le message MN8 est constitué par les trois écrans suivants qui apparaîssent successivement.

| | | |
|---|---|---|
| **Ecran 1** | **Timbre = XXXX** | **(2 secondes + bips d'alarme)** |
| | **Vous dépassez** | |
| **Ecran 2** | **le plafond de** | **(2 secondes)** |
| | **sécurité = XXXX** | |
| **Ecran 3** | **Valider** | **(1 seconde)** |
| | **ou Annuler** | |

Les écrans 1, 2 et 3 sont affichés pendant 2, 2 et 1 secondes, respectivement ; de plus des bips d'alarme sont émis pendant l'affichage de l'écran 1. Les valeurs du timbre et du plafond apparaîssent en clair.

Une annulation fait apparaître le message MN2, mais si l'opérateur confirme la valeur du timbre en appuyant sur la touche validation, la valeur du timbre est acceptée malgré un dépassement du plafond. Dans ce cas les messages MN4 ou MN5 apparaîssent, suivant le mode de fonctionnement de la machine à affranchir.

Si le plafond de sécurité, chargé par l'opérateur, est égal à la capacité maximum de la machine, par exemple 9999 pour une machine à quatre chiffres, le plafond de sécurité n'existe plus ; par contre si l'opérateur a chargé la valeur 0000, alors la composition de la valeur de chaque timbre nécessite une double validation, une pour le message MN3 et une pour le message MN8.

La limite d'affranchissement sera généralement supérieure au plafond de sécurité, puisqu'elle interdit tout affranchissement, mais bien entendu l'opérateur reste libre de son choix, ainsi que des valeurs plafond de sécurité et limite d'affranchissement.

Les messages relatifs aux opérations particulières accessibles par la touche menu constituent un deuxième ensemble de messages et sont désignés ci-après par MP0, MP1, ....

| | |
|---|---|
| Message MP0 | Début du menu. |
| Message MP1 | Les états machine. |
| Message MP2 | Les compteurs auxiliaires. |
| Message MP3 | Sélection d'un compteur auxiliaire. |
| Message MP4 | Confirmation de l'état sélectionné (pour un compteur). |
| Message MP5 | Sélection du mode de fonctionnement de la machine (coup par coup, rafale, rafale limitée). |
| Message MP6 | Confirmation du mode de fonctionnement sélectionné. |
| Message MP7 | Choix de nombre de plis (affranchissements) en mode rafale limitée. |
| Message MP8 | Changement du plafond de sécurité. |
| Message MP9 | Changement de la limite d'affranchissement. |

Si la machine n'a qu'un mode de fonctionnement, le message MP5, sélection du mode de fonctionnement n'existe pas ; si de plus une valeur limite fixe est imposée à la mise en service de la machine, le message MP9 changement de la limite d'affranchissement n'existe pas, mais la machine peut cependant être ou non équipée d'un plafond de sécurité, inférieur à la valeur limite, et le message MP8 changement du plafond de sécurité existe ou non.

Les différents messages MP0 à MP8 sont décrits ci-après, les figures 9A, 9B et 9C représentant l'enchaînement de ces messages.

Message MP0 Début du menu.

Ce message est constitué par les sept écrans suivants

| | | |
|---|---|---|
| Ecran 1 | Vous voulez | (1 seconde) |
| Ecran 2 | 1 - Les états Machine | (2 secondes) |
| Ecran 3 | 2 - Les compteurs Auxiliaires | (2 secondes) |
| Ecran 4 | 3 - Changer de fonctionnement | (2 secondes) |
| Ecran 5 | 4 - Changer le Plafond | (2 secondes) |
| Ecran 6 | 5 - Changer la Limite | (2 secondes) |
| Ecran 7 | Faites votre choix | (1 seconde) |

Les écrans 4, 5, 6 existent si la machine est équipée des options correspondantes.

Les écrans 1 et 7 sont affichés pendant 1 seconde, les écrans 2, 3, 4, 5 et 6 étant affichés pendant 2 secondes chacun.

Si l'opérateur appuie sur la touche annulation, il y a retour au message MN2.

Le chiffre figurant au début des écrans 2 à 6 correspond à une touche numérique du clavier et permet à l'opérateur de faire son choix parmi les options proposées.

Message MP1 Les états machine

Ce message est constitué par les sept écrans suivants :

| | | |
|---|---|---|
| Ecran 1 | Crédit restant = XXXXXX | (2 secondes) |
| Ecran 2 | Compteur d'index = XXXXXXXXXX | (2 secondes) |
| Ecran 3 | Compteur cycles = XXXXXXXX | (2 secondes) |
| Ecran 4 | Le JJ/MM/AA à HH . MM | (2 secondes) |
| Ecran 5 | Fonctionnement = XXXXXXXX | (2 secondes) |

| | | |
|---|---|---|
| Ecran 6 | Limite d'affran-<br>chissement = XXXX | (2 secondes) |
| Ecran 7 | Plafond de<br>Sécurité = XXXX | (2 secondes) |

Chaque écran est affiché pendant 2 secondes.

Ce message renseigne l'opérateur sur les états de la machine.

Dans les écrans 1, 2 et 3 les valeurs du crédit, du compteur d'index et du compteur de cycles sont indiquées en clair. Dans l'écran 4 la date, l'heure, et les minutes sont indiquées en clair ; si l'écran 4 est affiché en permanence, par appui sur une ou les deux touches de défilement, le point séparant l'heure, HH, et les minutes, MM, clignote au rythme de la seconde.

La deuxième ligne de l'écran 5 est constitué par l'un des trois textes suivants : coup par coup, rafale, rafale de XXX, le nombre de plis (affranchissements) étant indiqué en clair.

La valeur du plafond de sécurité, écran 7 , est également indiquée en clair, de même pour la limite d'affranchissement, écran 6.

Ce message MP1 ne comporte pas de choix. Un appui sur la touche annulation, ou la touche menu, provoque le retour au message MP0, début du menu.

Message MP2 Les compteurs auxiliaires.

Message MP3 Sélection d'un compteur auxiliaire.

Message MP4 Confirmation de l'état sélectionné (pour un compteur).

La machine à affranchir est équipée d'un certain nombre de compteurs auxiliaires, par exemple 20, numérotés de 1 à 20, chaque compteur auxiliaire étant affecté à un poste budgétaire ; chaque compteur auxiliaire comporte un compteur de francs qui totalise les valeurs des affranchissement effectués et un compteur de plis qui compte le nombre de plis (affranchissement) c'est-à-dire le nombre d'enveloppes ou d'étiquettes affranchies.

L'opérateur a la possibilité de mettre à zéro, à l'arrêt, ou en marche le compteur de francs et le compteur de plis d'un compteur auxiliaire, indépendamment des autres compteurs auxiliaires. Le message MP2 est utilisé avec les messages MP3 et MP4, comme indiqué ci-après, à la suite de la présentation des messages MP2, MP3 et MP4.

Le message MP2, les compteurs auxiliaires, est constitué par les sept écrans suivants :

| | | |
|---|---|---|
| Ecran 1 | Le compteur N°XX<br>est XXXXXXXX | (2 secondes) |
| Ecran 2 | XXXXXX, XX F<br>XXXXXX Plis | (3 secondes) |
| Ecran 3 | Mis à zéro le<br>JJ/MM/AA à HH.MM | (1 seconde) |
| Ecran 4 | Vous voulez<br>1 - Compteur N°XX | (2 secondes) |
| Ecran 5 | 2 - le suivant<br>3 - le précédent | (2 secondes) |
| Ecran 6 | 4 - RAZ compteur<br>5 - l'Arrêter | (2 secondes) |
| Ecran 7 | 6 - le Démarrer<br>Votre choix ? | (2 secondes) |

Les écrans 1 à 7 sont affichés pendant 2, 3, 1, 2, 2, 2, 2 secondes respectivement.
Dans l'écran 1 le numéro du compteur (de 1 à 20) apparaît et le texte de la deuxième ligne est complété par : "à l'arrêt" ou "en marche". Dans l'écran 2 le nombre de francs et le nombre de plis apparaîssent, et dans l'écran 3, la date et l'heure de la dernière remise à zéro sont visualisées.
Lorsque le message MP2 apparaît, suite à une action sur la touche 2 pendant le défilement du message MP0, le compteur auxiliaire visualisé est le premier (numéro 1).
Les chiffres 1 à 6 figurant dans les écrans 4 à 7 du message MP2 permettent à l'opérateur de faire un choix parmi les différentes options proposées, à l'aide des touches du clavier correspondant aux chiffres.
Si l'opérateur agit sur la touche 2, l'écran 1 du message MP2 apparaît avec le numéro du compteur suivant ou avec le compteur N°1 si avant cette action le compteur N°20 était visualisé.
Si l'opérateur agit sur la touche 3 le compteur précédent est sélectionné, ou le compteur N°20 si le compteur N°1 était visualisé avant cette action.
Pour choisir un compteur quelconque l'opérateur a la possibilité d'utiliser la touche 1 dont l'action fait apparaître le message de sélection MP3.
Pour changer l'état d'un compteur auxiliaire préalablement sélectionné l'opérateur dispose des touches 4, 5 et 6. Une action sur l'une de ces touches fait apparaître le message MP4 dont la validation ramène au message MP2 avec l'état choisi mentionné en deuxième ligne de l'écran 1, si l'état choisi est arrêt ou démarrage, et avec dans l'écran 3 la date et l'heure de la dernière remise à zéro ; si l'opérateur a choisi la remise à zéro, la date et l'heure sont celles du jour et de l'heure où cette remise à zéro est demandée.
L'opérateur peut alors sélectionner un autre compteur à l'aide de l'une des touches 1, 2 ou 3 comme indiqué dans les écrans 4 et 5, ou annuler, ce qui ramène au message MP0, début du menu.
Le message MP3, sélection d'un compteur auxiliaire, est constitué par les 2 écrans suivants :

| | | |
|---|---|---|
| **Ecran 1** | **Composer le**<br>**numéro = XX** | **(2 secondes ; XX clignotant)** |
| **Ecran 2** | **puis Valider** | **(1 seconde)** |

Tant que l'opérateur n'a pas tapé un numéro de 1 à 20, l'indication XX clignote. Les écrans 1 et 2 sont affichés pendant 2 et 1 secondes respectivement. Une annulation ramène le message MP2. Lorsque l'opérateur a composé un numéro de compteur auxiliaire la validation ramène le message MP2 avec exécution de l'ordre, c'est-à-dire que dans l'écran 1 du message MP2 le numéro du compteur est celui qui vient d'être composé.
Le message MP4, confirmation de l'état sélectionné, est constitué par les trois écrans suivants :

| | | |
|---|---|---|
| **Ecran 1** | **Vous Demandez**<br>**XXXXXXXX** | **(2 secondes)** |
| **Ecran 2** | **du compteur N° XX**<br>**Valider ce choix** | **(2 secondes)** |
| **Ecran 3** | **en appuyant**<br>**sur VALID et *** | **(1 seconde)** |

Les écrans 1, 2, 3 sont affichés pendant 2, 2, 1 secondes, respectivement. Le texte de la deuxième ligne de l'écran 1 est, selon que l'opérateur appuie sur la touche 4 ou 5 ou 6 lors de la visualisation du message MP2 :

une mise à zéro (touche 4)
un arrêt (touche 5)
le démarrage (touche 6)

Dans l'écran 2, le numéro du compteur est indiqué.

La validation est obtenue en appuyant simultanément sur les touches validation et étoile, et ramène au message MP2 avec exécution de l'ordre. L'annulation ramène au message MP2 sans exécution de l'ordre.

Message MP5 Sélection du mode de fonctionnement de la machine.
Message MP6 Confirmation du mode de fonctionnement sélectionné.

Message MP7 Choix du nombre de plis en mode rafale limitée
La machine à affranchir peut fonctionner selon l'un des trois modes suivant : Coup par coup, rafale, rafale limitée à XX affranchissements, qui peuvent être sélectionnés à l'aide des messages MP5, MP6 et MP7.

Le message MP5 est affiché lorsque dans le message MP0 l'opérateur appuie sur la touche 3 du clavier. Il est constitué par les cinq écrans suivants :

| | | |
|---|---|---|
| Ecran 1 | La machine | (1 seconde) |
| | Fonctionne en | |
| Ecran 2 | XXXXXXXX | (2 secondes) |
| | Valider ou | |
| Ecran 3 | Changer en | (2 secondes) |
| | 1 - coup par coup | |
| Ecran 4 | 2 - Rafale | (2 secondes) |
| | 3 - Rafale limitée | |
| Ecran 5 | Faites votre | (1 seconde) |
| | choix | |

Les écrans 1 et 5 sont affichés pendant 1 seconde, et les écrans 2, 3, 4 pendant 2 secondes chacun.

Le message MP6 est constitué par les écrans suivants

| | | |
|---|---|---|
| Ecran 1 | Vous demandez un | (1 seconde) |
| | Fonctionnement | |
| Ecran 2 | en XXXXXXX | (2 secondes) |
| | Valider ce choix | |
| Ecran 3 | en appuyant | (1 seconde) |
| | sur VALID et • | |

Les écrans 1, 2, 3 sont affichés pendant 1, 2, 1 secondes, respectivement.

Le message MP7 est constitué par les écrans suivants :

| | | |
|---|---|---|
| Ecran 1 | Composer le | (1 seconde) |
| | Nombre de | |
| Ecran 2 | Plis = XXX | (2 secondes) |
| | puis Valider | |

Les écrans 1 et 2 sont affichés pendant 1 et 2 secondes respectivement.

Lorsque le message MP5 est affiché la première ligne de l'écran 2 est constitué par : coup par coup, rafale, rafale de XXX, le nombre de plis XXX étant donné en clair, pour indiquer la mode de fonctionnement actuel de la machine. Si l'opérateur ne désire pas changer le mode, il appuie sur la touche validation, ce qui ramène le message MP0. S'il désire changer de mode il sélectionne ce mode à l'aide d'une des touches 1, 2, 3 du clavier, conformément aux indications des écrans 3 et 4 du message MP5. Dès qu'il a fait son choix le message MP6 apparaît, et l'écran 2 comporte en première ligne l'indication du mode : coup par coup, rafale, rafale limitée. La validation, à l'aide des touches V et étoile ramène le message MP5, en mode coup par coup et en mode rafale, la première ligne de l'écran 2 de MP5 indiquant le mode de fonctionnement validé ; par contre la validation fait apparaître le message MP7 si l'opérateur a validé le mode rafale limitée.

L'opérateur doit alors indiquer le nombre de plis, puis valider, ce qui ramène le message MP5 avec l'indication rafale de XXX en première ligne de l'écran 2, le nombre de plis XXX étant celui composé.

Quel que soit le mode sélectionné, la validation ramène le message MP5 ce qui permet à l'opérateur de vérifier que la machine fonctionne bien selon le mode désiré ; la validation du message MP5 ramène alors le message MP0.

Message MP8 Changement du plafond de sécurité.

En présence du message MP0, une action sur la touche 4 du clavier fait apparaître le message MP8 qui permet à l'opérateur de changer le plafond. On notera que l'opérateur a eu la possibilité d'obtenir préalablement la valeur du plafond de la machine par le message MP1, les états de la machine.

La message MP8 est constitué par les 3 écrans suivants :

| | | |
|---|---|---|
| **Ecran 1** | **Composer le** | **(1 seconde)** |
| | **Nouveau Plafond** | |
| **Ecran 2** | **de sécurité = XXX** | **(2 secondes)** |
| | **Valider ce choix** | |
| **Ecran 3** | **en appuyant** | **(1 seconde)** |
| | **sur VALID et •** | |

Les écrans 1, 2, 3 sont affichés pendant 1, 2, 1 secondes respectivement.

En présence de ce message l'opérateur frappe le nouveau plafond, qui s'affiche en clair dans l'écran 2 ; la validation, obtenue en appuyant simultanément sur les touches validation et étoile fait apparaître le message MP1 avec indication du nouveau plafond dans l'écran 7.

Message MP9 Changement de la limite d'affranchissement.

Ce message apparaît lorsque dans le message MP0 l'opérateur appuie sur la touche 5, et est constitué par les trois écrans suivants.

| | | |
|---|---|---|
| **Ecran 1** | **Composer la** | **(1 seconde)** |
| | **Nouvelle** | |
| **Ecran 2** | **Limite d'Affran-** | **(2 secondes)** |
| | **chissement = XXXX** | |
| **Ecran 3** | **Valider avec** | **(1 seconde)** |
| | **VALID et •** | |

Au fur et à mesure de la composition de la nouvelle limite d'affranchissement celle-ci apparaît dans l'écran 2. La validation est obtenue en appuyant simultanément sur les touches validation et étoile, ce qui ramène au message MP1.

On a représenté figure 4 une partie du contenu de la mémoire de travail, la partie décrite étant utilisée par les programmes spécifiques. La mémoire de travail contient également les états machines, les compteurs auxiliaires, le plafond, la limite d'affranchissement, le crédit dans des espaces réservés.

On va décrire à présent, à l'aide de deux exemples, le fonctionnement de la machine. Le premier exemple est le message MN1, vérification de la date, et le deuxième exemple est le message MP0, début du menu. Ces messages, comme tous les messages, utilisent les cinq programmes spécifiques décrits précédemment qui se déroulent automatiquement dès que la machine est en marche.

Message MN1 Vérification de la date.

La figure 5 représente l'organigramme de ce message.

Ce message apparaît à la première mise sous tension de la journée, les deux écrans composants ce message étant rappelés ci-après :

| | | |
|---|---|---|
| **Ecran 1** | **Vérifier l'état des molettes** | **(1 seconde + 2 bips sonores)** |
| **Ecran 2** | **Date = JJ/MM/AA puis valider** | **(2 secondes)** |

Les textes fixes "vérifier l'état des molettes" et "date =JJ/MM/AA puis valider" sont contenus dans la mémoire de texte ; chaque texte d'un écran occupant 32 octets, le message MN1 occupe donc 64 octets dans la mémoire de texte, comme indiqué figure 3.

A chaque message correspond, dans la mémoire programme, un programme particulier, il y a donc un programme vérification de la date qui permet l'exécution successive des actions suivantes :

Action 1 - Initialisation du programme.

- Charger la durée d'un bip sonore, par exemple le nombre 15, dans l'octet CAS1 de la commande de l'alarme sonore de la mémoire de travail, ce nombre correspondant à une durée de 0,3 seconde d'un bip sonore.
- Charger la durée du silence entre bips, par exemple le nombre 25 pour une durée de 0,5 seconde, dans l'octet CAS2.
- Charger le nombre de bips sonores, 2 dans le cas de l'écran 1, dans l'octet CAS0.
- Transférer le texte de l'écran 1 "vérifier l'état des molettes" de la mémoire de texte dans les octets IA0 à IA31 de la mémoire de travail, chaque lettre et espace occupant un octet.
- Charger le nombre 50 dans l'octet de temporisation TE0, ce nombre correspondant à une temps d'affichage de 1 seconde de l'écran 1.
- Passer à l'action 2.

Action 2 -

- Si la touche validation est enfoncée, le bit 5 de l'octet IC1 de l'image clavier dans la mémoire de travail (figure 4) a alors la valeur 0, passer au message MN2 ; le programme vérification de la date est terminé.
- Si la temporisation de 1 seconde est écoulée, le contenu de l'octet TE0 étant nul, alors passer à l'action 3, sinon recommencer l'action 2.

Action 3 -

- Transférer le texte de l'écran 2 "Date = JJ/MM/AA puis valider" de la mémoire de texte dans les octets IA0 à IA31 de la mémoire de travail.
- Prendre dans la mémoire de travail le contenu de l'octet IHC0 (année) de l'image de l'horloge calendrier, le convertir en décimal, passer en code ASCII et ranger le résultat dans l'octet IA13 (poids fort des années) et dans l'octet IA14 (poids faible des années).
- Prendre le contenu de l'octet IHC1 (mois) le traiter comme indiqué pour l'octet IHC0, et ranger le résultat dans l'octet IA10 (poids fort des mois) et l'octet IA11 (poids faible des mois).
- Prendre le contenu de l'octet IHC2 (jour), le traiter comme précédemment, et ranger le résultat dans l'octet IA7 (poids fort des jours) et l'octet IA8 (poids faible des jours).
- Charger le nombre 100 dans l'octet de temporisation TE0, ce nombre correspondant à un temps d'affichage de 2 secondes de l'écran 2.

Passer à l'action 4 :

Action 4 -

- Si la touche validation est enfoncée, bit 5 de l'octet IC1 de l'image clavier à "0", fin du programme vérification de la date ; passer au message MN2 .
- Si le contenu de l'octet de temporisation TE0 est égal à zéro passer à l'action 1 (rebouclage du message MN1), sinon recommencer l'action 4.

Message MP0 - Début du menu.

Les sept écrans constituant ce message sont rappelés ci-après :

| | | |
|---|---|---|
| Ecran 1 | Vous voulez | (1 seconde) |
| Ecran 2 | 1 - Les Etats Machine | (2 secondes) |
| Ecran 3 | 2 - Les Compteurs Auxiliaires | (2 secondes) |
| Ecran 4 | 3 - Changer de Fonctionnement | (2 secondes) |
| Ecran 5 | 4 - Changer le Plafond | (2 secondes) |
| Ecran 6 | 5 - Changer la Limite | (2 secondes) |
| Ecran 7 | Faites votre choix | (1 seconde) |

Pour simplifier la réalisation du programme, début du menu, on utilise un sous-programme SPMP0 dont l'organigramme est représenté figure 6. Ce sous-programme réalise les fonctions suivantes :

- Si la touche 1 du clavier est enfoncée, le bit 1 de l'octet IC0 de l'image clavier a la valeur "0" : fin de programme, passer au message MP1.
- Si la touche 2 est enfoncée, le bit 2 de l'octet IC0 a la valeur "0" : fin de programme, passer au message MP2.
- Si la touche 3 est enfoncée, le bit 3 de l'octet IC0 a la valeur "0" : fin de programme, passer au message MP5.
- Si la touche 4 est enfoncée, le bit 4 de l'octet IC0 a la valeur "0" : fin de programme, passer au message MP8.
- Si la touche 5 est enfoncée, le bit 5 de l'octet IC0 a la valeur "0" : fin de programme, passer au message MP9.
- Si la touche annulation est enfoncée, le bit 7 de l'octet ITC1 = 0, retour au message MN2.
- Si le contenu de l'octet TE0 de temporisation, dans la mémoire de travail est nul, passer à l'action suivante du programme début du menu, sinon recommencer le sous programme.

Le programme début du menu représenté par l'organigramme de la figure 7 nécessite les actions suivantes :

Action 1 -

- Transférer le texte de l'écran 1 de la mémoire de texte dans l'image afficheur IA de la mémoire de travail.
- Charger le nombre 50 dans l'octet TE0 de temporisation de la mémoire de travail pour avoir un temps d'affichage de 1 seconde pour l'écran 1.
- Exécuter le sous-programme SPMP0

Action 2 -

- Transférer le texte de l'écran 2 de la mémoire de texte dans l'image afficheur IA de la mémoire de travail.
- Charger le nombre 100 dans l'octet TE0 pour avoir un temps d'affichage de 2 secondes pour l'écran 2.
- Exécuter le sous-programme SPMP0.

Action 3 -

- Transférer le texte de l'écran 3 de la mémoire de texte dans l'image afficheur IA.
- Charger le nombre 100 dans l'octet TE0 de temporisation.
- Exécuter le sous-programme SPMP0.

Action 4 -

- Transférer le texte de l'écran 4 de la mémoire de texte dans l'image afficheur IA.
- Charger le nombre 100 dans l'octet TE0 de temporisation.
- Exécuter le sous-programme SPMP0.

Action 5 -

- Transférer le texte de l'écran 5 de la mémoire de texte dans l'image afficheur IA.
- Charger le nombre 100 dans l'octet TE0 de temporisation.
- Exécuter le sous-programme SPMP0.

Action 6 -

- Transférer le texte de l'écran 6 de la mémoire de texte dans l'image afficheur IA.
- Charger le nombre 100 dans l'octet TE0 de temporisation.
- Exécuter le sous-programme SPMP0.

Action 7 -

- Transférer le texte de l'écran 7 de la mémoire de texte dans l'image afficheur IA.
- Charger la nombre 50 dans l'octet TE0 de temporisation.
- Exécuter le sous-programme SPMP0

Action 8 -

- Recommencer l'action 1 (rebouclage).

Bien entendu à chaque message MN2, MN3,... et MP1, MP2,..., correspond un programme particulier, les deux programmes décrits ci-dessus étant donnés comme exemples pour les messages MN1 et MP0.

Dans ces deux exemples la machine fonctionne par défilement d'écran, un écran remplaçant un autre écran.

Il est possible d'obtenir un défilement ligne par ligne, en découpant chaque message par un plus grand nombre d'écrans, le programme correspondant audit message étant modifié pour tenir compte du nombre d'écrans.

On va décrire la manière d'obtenir un tel défilement ligne par ligne à l'aide d'un exemple concernant le message MN1.

Le message MN1 n'est pas modifié dans la mémoire de texte, mais le programme relatif à ce message est modifié de manière à constituer 3 écrans au lieu de 2 ; ces 3 écrans sont :

| | | |
|---|---|---|
| **Ecran 1** | **Vérifier l'état des molettes** | **(1 seconde + 2 bips sonores)** |
| **Ecran 1bis** | **des molettes Date = JJ/MM/AA** | **(1 seconde)** |
| **Ecran 2** | **Date = JJ/MM/AA puis valider** | **(2 secondes)** |

Par rapport à la solution défilement écran par écran on constate que le défilement ligne par ligne impose la création d'un écran supplémentaire entre deux écrans successifs, ici l'écran 1bis, dont la première ligne reprend le texte de la dernière ligne de l'écran précédent, et dont la deuxième ligne reprend le texte de la première ligne de l'écran suivant. Dans l'exemple du message MN1 avec 3 écrans, le programme correspondant reprend les actions 1, 3 et 4 du programme décrit précédemment, sans modification, et l'action 2 dont seule la fin est modifiée, et il comporte deux actions supplémentaires 2bis et 2ter.

La fin de l'action 2 est modifiée comme suit :

- Si la temporisation de 1 seconde est écoulée, le contenu de l'octet TE0 de temporisation est nul, alors passer à l'action 2bis, sinon recommencer l'action 2.

Les actions 2bis et 2ter sont :

Action 2bis -

- Transférer 32 octets de la mémoire de texte dans l'image afficheur IA de la mémoire de travail. Le transfert débute dans la mémoire de texte à l'octet 16 du message MN1 jusqu'à l'octet 47 compris ; ces octets correspondent aux lignes E1L2 et E2L1 des écrans E1 et E2 comme indiqué figure 3, ces deux lignes constituant l'écran E1bis.
- Prendre dans la mémoire de travail le contenu de l'octet IHC0 (année), passer en décimal puis en code ASCII et ranger le résultat dans lesoctets IA29 et IA30 de l'image afficheur, dans la mémoire de travail.
- Prendre le contenu de l'octet IHC1 (mois) passer en décimal puis en code ASCII et ranger le résultat dans les octets IA26 et IA27 de l'image afficheur.
- Prendre le contenu de l'octet IHC2 (jour), passer en décimal puis en code ASCII et ranger le résultat dans les octets IA23 et IA24 de l'image afficheur.
- Charger le nombre 50 dans l'octet TE0 de temporisation.
- Passer à l'action 2ter.

Action 2ter.

- Si la touche validation est enfoncée : fin de programme, passer au message MN2.
- Si le contenu de l'octet TE0 de temporisation est nul, alors passer à l'action 3, sinon recommencer l'action 2ter.

Les figures 5, 6, 7, 8A, 8B, 9A, 9B, 9C sont des organigrammes comme indiqué précédemment.

Dans ces figures, les chiffres 1, 2..., les lettres V, A, M et le signe * qui figurent dans les losanges désignent les touches numériques ; de validation (V), d'annulation (A), la touche menu (M) et la touche étoile (*) du clavier. En sortie des losanges le chiffre 1 signifie oui, et le chiffre 0 signifie non.

Dans les figures 5, 6, 7, la référence DEB signifie début.

Dans les figures 5 et 7, les références AI, AII, AIII... désignent les actions, décrites précédemment lors de la présentation du fonctionnement de la machine à l'aide de deux exemples : le message MN1 dont l'organigramme est représenté figure 5, et le message MP0 dont l'organigramme est représenté figure 7.

Dans la figure 8A, la référence MST dans le rectangle du haut signifie "mise sous tension", la référence CC dans le rectangle qui suit le message MN3 signifie "charger le chiffre", l'indication T > L dans le losange signifie "valeur du timbre composée supérieure à la limite (L)".

Dans la figure 8B, les indications T > P et T > C dans les losanges signifient valeur du timbre supérieure au plafond (P), et valeur du timbre supérieure au crédit (C) ; la lettre E signifie présence d'une enveloppe. Les références R et RL dans les losanges se rapportent à "rafale (R)" et à "rafale limitée (RL)". Dans les rectangles, la mention "Prog AFF" signifie " programme d'affranchissement".

Dans les figures 9A et 9B la référence CC, figurant dans un rectangle, signifie "charger le chiffre".

Les différents programmes relatifs aux messages sont dans la mémoire programme, et il est possible d'avoir tous ces programmes prévus pour un défilement écran par écran, ou pour un défilement ligne par ligne, ou encore d'avoir certains programmes de messages pour un défilement écran par écran et d'autres programmes de messages pour un défilement ligne par ligne. Quel que soit le type de défilement, les textes des messages dans la mémoire de texte sont les mêmes, la création des écrans supplémentaires pour un défilement ligne par ligne étant faite par le programme relatif au message, ledit programme étant prévu pour un tel défilement. Dans le défilement ligne par ligne, la première ligne de chaque écran, à partir du deuxième, reprend la deuxième ligne de l'écran précédent, dans le cas d'écrans de deux lignes.

Dans le cas d'écrans à L lignes, chaque écran à partir du deuxième reprend les L-1 dernières lignes de l'écran précédent ; le programme est alors prévu pour des écrans de L lignes et un défilement ligne par ligne, le programme commandant le prélèvement des L premières lignes du message, puis des prélèvement de L lignes en décalant chaque prélèvement d'une ligne par rapport au prélèvement précédent. Le dernier écran comprend les L dernières lignes du message.

Dans l'exemple de réalisation décrit en regard des figures annexées, on a supposé que l'afficheur était du type alphanumérique. Si l'on utilise un afficheur du type graphique celui-ci permet non seulement un défilement par écrans ou un défilement ligne par ligne comme indiqué ci-dessus, mais il permet également un défilement continu, lent, dans le sens vertical, dans lequel la ligne de texte du haut de l'afficheur disparait progressivement tandis qu'une nouvelle ligne de texte apparaît progressivement en bas de l'afficheur. Un tel afficheur graphique permet également de moduler les dimensions des caractères visualisés.

Dans la description des messages, les temps d'affichage des écrans sont donnés à titre d'exemples, ces temps étant fixés au chargement des programmes dans la mémoire programme ; il en est de même en ce qui concerne les différents temps relatifs aux bips sonores ; les écrans pour lesquels une alarme sonore est prévue peuvent également être plus nombreux que ceux mentionnés dans la description.

L'invention s'applique à toute machine à affranchir, y compris les machines à affranchir automatiques dans lesquelles les enveloppes ne sont pas présentées une par une par l'opérateur, mais présentées automatiquement à la machine.

## Revendications

1. Machine à affranchir, comportant un microprocesseur (4), des mémoires (5,6,7), un afficheur alphanumérique (2), et un clavier (1); caractérisée en ce qu'elle comporte des moyens pour fournir à l'afficheur (2) des messages sous une forme fractionnée, chaque message étant fractionné en plusieurs parties de longueur au plus égale à la capacité de l'afficheur (2), si ledit message dépasse cette capacité; chaque partie étant affichée successivement et automatiquement, avec rebouclage au début du message;
   et en ce que le clavier comporte :
   - une touche (M), dite touche menu, commandant l'affichage du début d'un menu, ledit menu étant constitué d'une pluralité de messages affichés successivement et automatiquement;
   - deux touches, dites de défilement ( ↑ , ↓ ) pour modifier le rythme et l'ordre du défilement des parties de messages sur l'afficheur (2).

2. Machine à affranchir selon la revendication 1, caractérisée par le fait qu'un premier ensemble de messages comporte un message affranchissement ou menu (MN2), un message composition de la valeur d'affranchissement (MN3), un message valeur du timbre validée (MN4) et que le message affranchissement ou menu apparaît après une opération d'affranchissement, ou après appui sur une touche annulation.

3. Machine à affranchir selon la revendication 2, caractérisée par le fait que le premier ensemble de messages comporte également un message d'alerte Vérification de la date (MN1) lorsque la machine n'est pas équipée d'une mise à la date automatique, ledit message apparaissant automatiquement et uniquement à la première mise sous tension d'une journée, le message affranchissement ou menu (MN2) apparaissant après validation du message vérification de la date et lors de mises sous tension sans changement de date.

4. Machine à affranchir selon la revendication 2, caractérisée par le fait que le premier ensemble de messages comporte également un message d'alerte Dépassement du crédit (MN6) qui apparaît lorsque la valeur d'affranchissement composée dépasse le crédit, une annulation ramenant au message affranchissement ou menu (MN2).

5. Machine à affranchir selon la revendication 1, caractérisée par le fait qu'elle comporte une vingtaine de compteurs auxiliaires, chaque compteur auxiliaire comprenant un compteur de francs et un compteur de plis, et occupant un espace mémoire (7).

6. Machine à affranchir selon la revendication 3, caractérisée par le fait qu'un deuxième ensemble de messages comporte un message début du menu (MP0) apparaissant lorsqu'un opérateur appuie sur la touche menu, ledit message comportant des options correspondant chacune à un message, chaque option étant repérée par un chiffre correspondant à une touche du clavier, les messages correspondant aux options étant : les états machine (MP1), les compteurs auxiliaires (MP2), et que le message les compteurs auxiliaires comporte une première option correspondant à un message sélection d'un compteur auxiliaire (MP3), et une deuxième, une troisième, et une quatrième options correspondant à un message confirmation de l'état sélectionné (MP4) pour une mise à zéro, à l'arrêt, ou un démarrage d'un compteur auxiliaire préalablement sélectionné, l'état sélectionné étant affiché dans le message confirmation de l'état sélectionné, le compteur sélectionné étant mis dans l'état sélectionné après validation dudit état sélectionné.

7. Machine à affranchir selon la revendication 1, caractérisée par le fait qu'une mémoire de travail (7) comporte une première zone (ITC) de deux octets pour une image temporaire clavier, une deuxième zone (IC) de deux octets pour une image clavier, une troisième zone (IA) ayant un nombre d'octets égal au produit du nombre L de lignes par le nombre N de caractères d'une ligne de l'afficheur, pour une image afficheur, ladite troisième zone mémorisant une partie d'un message transférée d'une mémoire de texte (6) dans une mémoire de travail, une quatrième zone (IHC) de six octets pour une image de l'horloge calendrier donnant des indications d'années, de mois, de jour, d'heure, de minute et de seconde, une cinquième zone (TE) d'un octet pour une temporisation d'écran donnant un temps d'affichage de l'écran mémorisé dans la troisième zone, ledit temps d'affichage dépendant de l'importance du texte de l'écran et étant chargé par chaque programme relatif à un message, que les deuxième et troisième zones sont lues cycliquement lors du déroulement de chaque programme relatif à un message, et que la quatrième zone est lue lors du déroulement des programmes relatifs aux messages, uniquement lorsque lesdits messages comportent une indication de date et de temps, et transférée dans l'image afficheur pour visualisation.

8. Machine à affranchir selon la revendication 7, caractérisée par le fait qu'une mémoire programme comporte des programmes spécifiques qui sont : un programme d'acquisition clavier pour prélever l'état de chaque touche, ranger cet état dans l'image temporaire clavier puis transférer l'image temporaire clavier dans l'image clavier lorsque l'image temporaire clavier reste identique pendant un temps fixé par le programme d'acquisition qui se déroule automatiquement de manière cyclique, un programme afficheur qui se déroule automatiquement de manière cyclique pour prélever chaque octet de l'image afficheur et l'envoyer à l'afficheur pour visualisation, un programme d'acquisition de l'horloge calendrier qui se déroule automatiquement de manière cyclique pour prélever l'état de six compteurs, année, mois, jour, heure, minute, seconde, et ranger leur état dans l'image horloge calendrier, un programme de temporisation qui se déroule automatiquement de manière cyclique pour prélever l'octet de temporisation d'écran et décrémenter sa valeur d'une unité à chaque prélèvement.

9. Machine à affranchir selon la revendication 1, caractérisée par le fait que chaque touche de défilement commande, lorsqu'elle est enfoncée, l'arrêt du défilement des écrans, l'une des touches commandant au relâchement la visualisation de l'écran suivant et l'autre touche commandant au relâchement la visualisation de l'écran précédent.

10. Machine à affranchir selon la revendication 1, caractérisée par le fait que dans un message comportant au moins 2 L lignes on constitue, par le programme relatif audit message, des écrans de L lignes chacun, chaque écran à partir du deuxième reprenant L-1 dernières lignes de l'écran précedent, pour obtenir un défilement ligne par ligne lorsque lesdit écrans sont affichés successivement.

## Claims

1. A franking machine comprising a microprocessor (4), memories (5, 6, 7), an alphanumeric display (2) and a keyboard (1), characterized in that it comprises means for feeding to the display (2) messages in a split form, each message being split into several parts whose length is at most equal to the capacity of the display (2), if said message exceeds said capacity, each part being displayed successively and automatically and the end of message being followed by the beginning of said message, and that the keyboard comprises
   - a menu key (M) controlling the display of the beginning of a menu, said menu being constituted by a plurality of successively and automatically displayed messages,
   - two scroll keys (↑, ↓) allowing to modify the rhythm and the scroll order of the message parts on the display (2).

2. A franking machine according to claim 1, characterized by the fact that the first set of messages includes a franking message or menu (MN2), a message for keying in the franking value (MN3), a message indicating a confirmed stamp value (MN4), and that the franking message or menu appears after a franking operation or after the Cancel key has been depressed.

3. A franking machine according to claim 2, characterized by the fact that the first set of messages also includes a warning message for verifying the date (MN1) when the machine is not fitted with automatic dating, said message appearing automatically and solely on the first occasion that the machine is powered up in the day, the franking message or menu (MN2) appearing after the date verification message has been confirmed and whenever the machine is powered up without a change of date.

4. A franking machine according to claim 2, characterized by the fact that the first set of messages also includes an out-of-credit warning message (MN6) which appears when the keyed-in franking value exceeds the credit, with a Cancel key depression returning to the franking message or menu (MN2).

5. A franking machine according to claim 1, characterized by the fact that it includes some twenty auxiliary meters, each auxiliary meter comprising a money meter and a mail item counter, and occupying memory space (7).

6. A franking machine according to claim 3, characterized by the fact that the second set of messages includes a beginning-of-menu message (MP0) which appears when the operator presses the Menu key, said message including options each of which corresponds to a message, with each option being identified by a digit corresponding to one of the keys of the keyboard, and the messages corresponding to the options include "machine state" (MP1) and "auxiliary meters" (MP2), with the "auxiliary meters" message including a first option corresponding to an auxiliary meter select message (MP3), and second, third, and fourth options corresponding to messages confirming a selected state (MP4) for the previously selected auxiliary meter, said states being reset to zero, stop, or start, with the selected state being displayed in the selected state confirmation message, and with the selected meter being put into the selected state after said selected state has been confirmed.

7. A franking machine according to claim 1, characterized by the fact that the working memory (7) includes a first 2-byte temporary keyboard image zone (ITC), a second 2-byte keyboard image zone (IC), a third zone (IA) for the image to be displayed comprising a number of bytes equal to the product of the number L of lines multiplied by the number N of characters per line of the display, said third zone storing one screen of a message transferred from the text memory (8) into the working memory, a 6-byte fourth zone (IHC) for a calendar clock image giving indications specifying the year, the month, the day, the hour, the minute, and the second, a fifth 1-byte zone (TE) for screen timing giving the display time of the screen stored in the third zone, said display time depending on the amount of screen text and being loaded by each program individually for each message, that the second and third zones are read cyclically during the running of each program relating to a message, and that the fourth zone is read during the running of programs relating to messages solely when said messages include an indication of the date and the time, which indication is transferred into the display image in order to be displayed.

8. A franking machine according to claim 7, characterized by the fact that the program memory includes specific programs as follows: a keyboard acquisition program for reading the state of each key, storing said state in the temporary keyboard image, and then transferring the temporary keyboard image to the keyboard image when the temporary keyboard image remains identical for a period of time fixed by the acquisition program, which program runs automatically in cyclic manner; a display program which runs automatically in cyclic manner to take each byte from the display image and apply it to the display for display purposes; a calendar clock acquisition program which runs automatically in cyclic manner to read the state of six counters relating respectively to the year, the month, the day, the hour, the minute, and the second, and to store the states of these counters in the calendar clock image; and a timing program which runs automatically in cyclic manner to read the screen timing byte and to decrement its value by unity each time it reads it.

9. A franking machine according to claim 12, characterized in that each arrow key, on being depressed, causes screen scrolling to stop, with one of the keys, on being released, causing the next screen to be displayed and with the other key, on being released, causing the preceding screen to be displayed.

10. A franking machine according to claim 1, characterized in that in a message comprising at least 2L lines, the program relating to said message builds up screens of L lines each, with each screen starting with the second screen reproducing the L-1 last lines of the preceding screen, thereby obtaining line-by-line scrolling when said screens are displayed in succession.

**Patentansprüche**

1. Frankiermaschine mit einem Mikroprozessor (4), Speichern (5, 6, 7), einer alphanumerischen Anzeige (2) und einer Tastatur (1), dadurch gekennzeichnet, daß sie Mittel besitzt, um der Anzeige (2) Nachrichten in Bruchstückform zu liefern, wobei jede Nachricht in ebensoviele Teile einer der Kapazität der Anzeige (2) höchstens entsprechenden Länge aufgeteilt wird, sofern die Nachricht diese Kapazität überschreitet, wobei jedes Bruchstück nacheinander und automatisch zur Anzeige gelangt und das Ende auf den Anfang der Nachricht rückgeschleift ist, und daß die Tastatur aufweist:
   - eine Taste (M), Menütaste genannt, die die Anzeige des Beginns eines Menüs steuert, wobei das Menü aus einer Mehrzahl von nacheinander und automatisch angezeigten Nachrichten besteht,
   - zwei Durchlauftasten (↑, ↓), um den Rhythmus und die Reihenfolge des Durchlaufens der Bruchstücke der Nachrichten auf der Anzeige (2) zu verändern.

2. Frankiermaschine nach Anspruch 1, dadurch gekennzeichnet, daß eine erste Gruppe von Nachrichten eine erste Frankiernachricht oder ein Menü (MN2), eine Nachricht betreffend das Eintippen eines Frankierwerts (MN3) und eine Nachricht betreffend die Bestätigung des Frankierwerts (MN4) enthält und daß die Frankiernachricht oder Menünachricht nach einer Frankieroperation oder nach Drücken auf eine Annulierungstaste erscheint.

3. Frankiermaschine nach Anspruch 2, dadurch gekennzeichnet, daß die erste Gruppe von Nachrichten auch eine Nachricht enthält, die auf die Überprüfung des Datums hinweist (MN1), wenn die Maschine nicht mit einer automatischen Datumseinstellung ausgerüstet ist, wobei diese Nachricht automatisch und nur beim ersten Einschalten am Tag erscheint, während die Frankier- oder Menünachricht (MN2) nach der Bestätigung der Nachricht bezüglich der Überprüfung des Datums sowie beim Einschalten ohne Datumswechsel auf dem Bildschirm erscheint.

4. Frankiermaschine nach Anspruch 2, dadurch gekennzeichnet, daß die erste Gruppe von Nachrichten weiter eine Nachricht (MN6) enthält, die auf die Überschreitung des Kreditrahmens hinweist und auftritt, wenn der eingetippte Frankierwert den Kreditwert übersteigt, worauf eine Annulierung wieder die Frankier- oder Menünachricht (MN2) aufscheinen läßt.

5. Frankiermaschine nach Anspruch 1, dadurch gekennzeichnet, daß sie etwa 20 Hilfszähler enthält, wobei jeder Hilfszähler einen Geldwertzähler und eine Stückzähler enthält und einen Speicherplatz (7) einnimmt.

6. Frankiermaschine nach Anspruch 3, dadurch gekennzeichnet, daß eine zweite Gruppe von Nachrichten eine Menüanfangsnachricht (MP0) enthält, die aufscheint, wenn ein Benutzer die Menütaste drückt, wobei diese Nachricht Optionen entsprechend je einer Nachricht enthält und wobei jede Option durch eine Ziffer bezeichnet ist, die einer Taste der Tastatur entspricht, daß die diesen Optionen entsprechenden Nachrichten die Maschinenzustände (MP1) und die Hilfszähler (MP2) betreffen, und daß die Nachricht betreffend die Hilfszähler eine erste Option entsprechend einer Aufforderung zur Auswahl eines Hilfszählers (MP3) sowie eine zweite, dritte und vierte Option umfaßt, die eine Nachricht betreffend die Bestätigung des ausgewählten Zustands (MP4) für eine Nullsetzung, ein Anhalten oder ein Starten eines vorher ausgewählten Hilfszählers enthält, wobei der ausgewählte Zustand in der Bestätigungsnachricht des ausgewählten Zustands angezeigt wird und der ausgewählte Zähler in den gewählten Zustand nach der Bestätigung des ausgewählten Zustands gebracht wird.

**7.** Frankiermaschine nach Anspruch 1, dadurch gekennzeichnet, daß ein Arbeitsspeicher (7) eine erste Zone (ITC) aus zwei Oktetten für ein vorübergehendes Bild der Tastatur, eine zweite Zone (IC) mit zwei Oktetten für ein Bild der Tastatur, eine dritte Zone (IA), deren Anzahl von Oktetten gleich dem Produkt aus der Anzahl L von Zeilen mit der Anzahl N von Zeichen einer Zeile der Anzeige für ein anzuzeigendes Bild ist und die einen Teil einer von einem Textspeicher (6) in einen Arbeitsspeicher transferierten Nachricht speichert, und eine vierte Zone (IHC) mit sechs Oktetten zum Speichern eines Bilds des Kalenders mit den Angaben des Jahres, Monats, Tags, der Stunde, der Minute und der Sekunde und eine fünfte Zone (TE) mit einem Oktett für die Speicherung einer Bildschirmverzögerung enthält, die eine Anzeigezeit für das in der dritten Zone gespeicherte Bild definiert, wobei die Anzeigezeit von der Bedeutung des Texts auf dem Bildschirm abhängt und von jedem für eine Nachricht spezifischen Programm geladen wird, daß die zweite und die dritte Zone zyklisch während des Ablaufs jedes Programms bezüglich einer Nachricht ausgelesen werden und daß die vierte Zone während des Ablaufs der die Nachrichten betreffenden Programme nur ausgelesen wird, wenn die Nachrichten eine Angabe über Datum und Zeit enthalten, die in das Anzeigebild zur Anzeige übertragen wird.

**8.** Frankiermaschine nach Anspruch 7, dadurch gekennzeichnet, daß ein Programmspeicher spezifische Programme enthält, nämlich ein Programm zur Abfrage der Tastatur, um den Zustand jeder Taste zu erfassen, diesen Zustand im vorübergehenden Tastaturbild einzuordnen und dann das vorübergehende Tastaturbild in das Tastaturbild zu transferieren, wenn das vorübergehende Tastaturbild während einer durch das Tastaturerfassungsprogramm fixierten Zeit unverändert bleibt, wobei das Tastaturerfassungsprogramm automatisch und zyklisch abläuft, ein Anzeigeprogramm, das automatisch und zyklisch abläuft, um jedes Oktett des anzuzeigenden Bilds zu erfassen und an die Anzeige zur Wiedergabe zu senden, ein Programm zur Erfassung des Kalenders, das automatisch und zyklisch abläuft, um den Zustand von sechs Zählern, nämlich Jahr, Monat, Tag, Stunde, Minute und Sekunde zu erfassen und ihren Zustand in das Kalenderbild einzuordnen, ein Verzögerungsprogramm, das automatisch und zyklisch abläuft, um das Bildschirm-Zeitverzögerungsoktett aufzunehmen und seinen Wert bei jeder Neuaufnahme um eine Einheit zu verringern.

**9.** Frankiermaschine nach Anspruch 1, dadurch gekennzeichnet, daß beim Drücken jeder Durchlauftaste der Bildschirmdurchlauf angehalten wird, wobei beim Loslassen einer dieser Tasten das nächste Bildschirmbild angezeigt wird und beim Loslassen der anderen das vorherige Bildschirmbild zur Anzeige gelangt.

**10.** Frankiermaschine nach Anspruch 1, dadurch gekennzeichnet, daß in einer Nachricht, die mindestens 2L Zeilen enthält, durch das dieser Nachricht entsprechende Programm Bildschirmbilder mit je L Zeilen zusammengestellt werden, wobei jedes Bildschirmbild ab dem zweiten Bild die L-1 letzten Zeilen des vorhergehenden Bildschirmbilds wieder aufnimmt, um so ein Durchlaufen Zeile für Zeile zu erreichen, wenn die Bildschirmbilder nacheinander angezeigt werden.

FIG.1

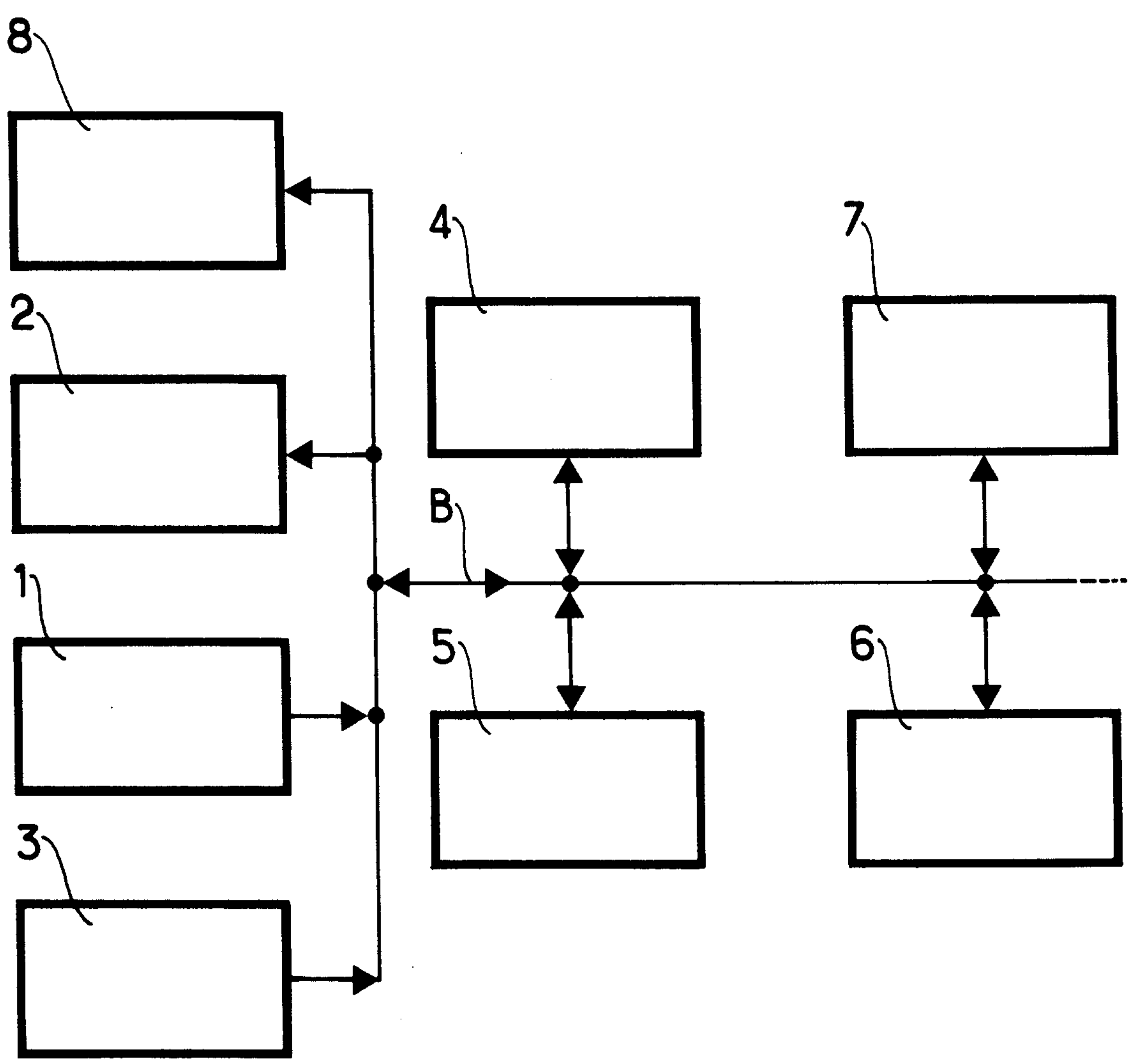

FIG.2

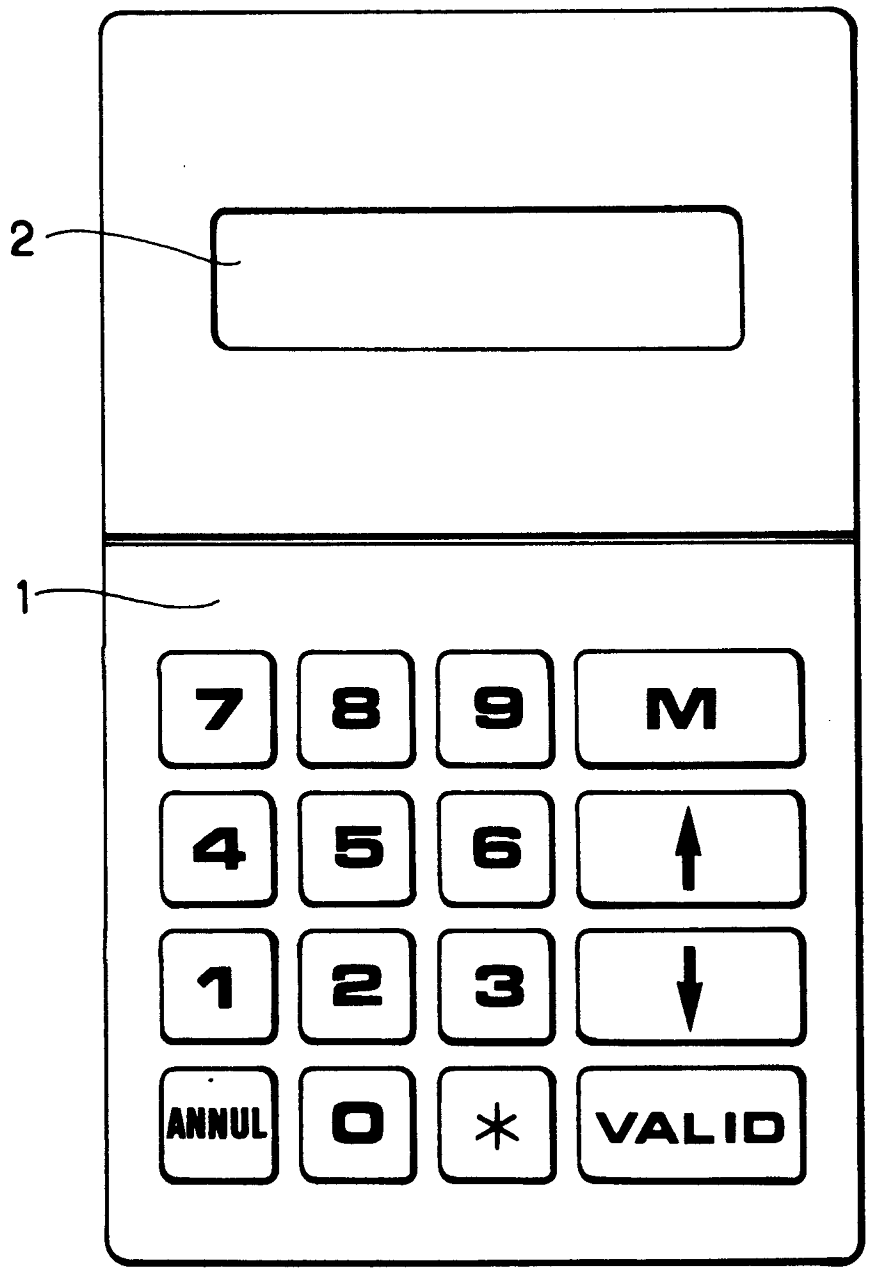

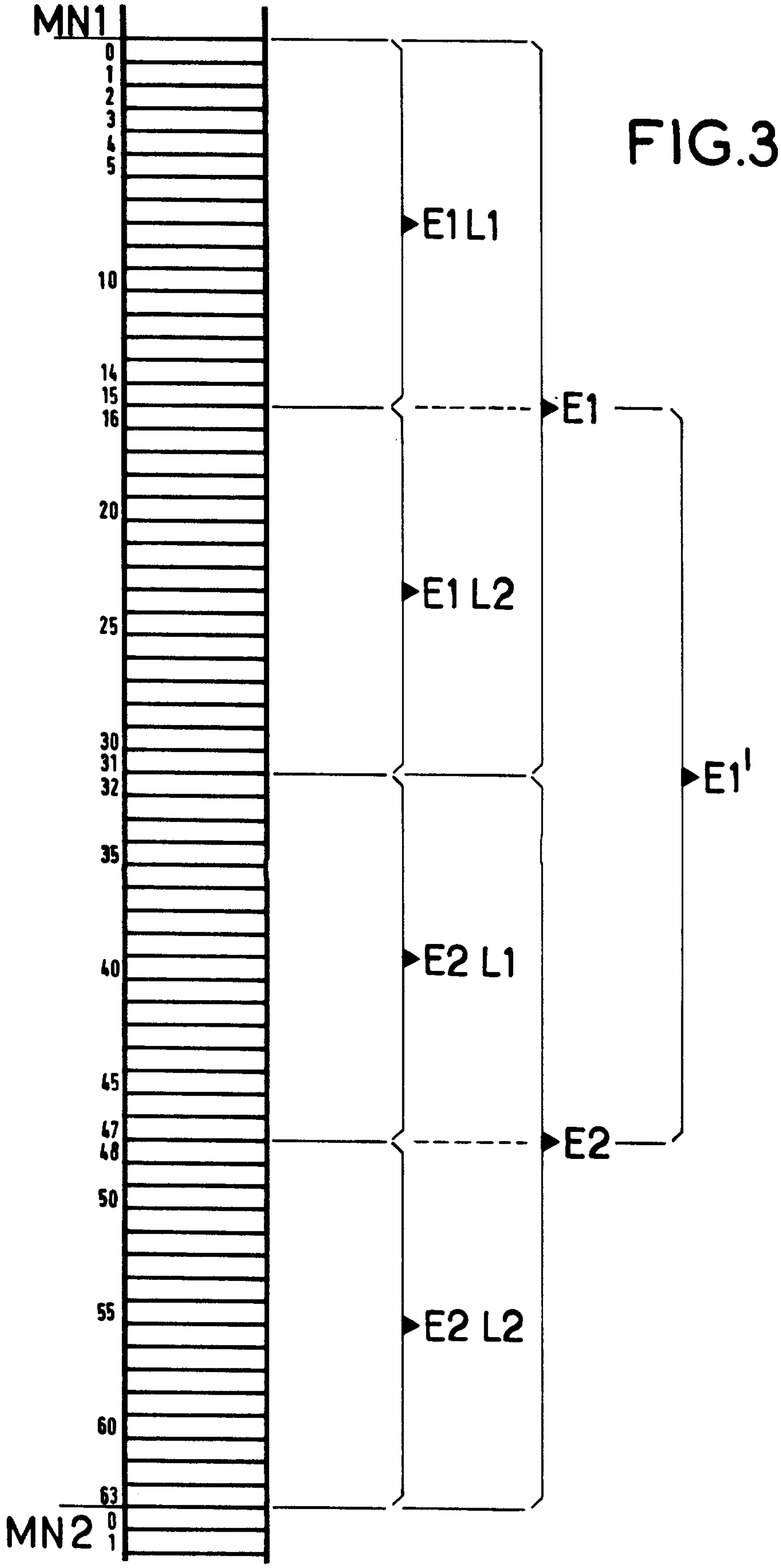
MN1
0
1
2
3
4
5
10
14
15
16
20
25
30
31
32
35
40
45
47
48
50
55
60
63
MN2
0
1
E1 L1
E1 L2
E2 L1
E2 L2
E1
E2
E1'

FIG.3

FIG.4

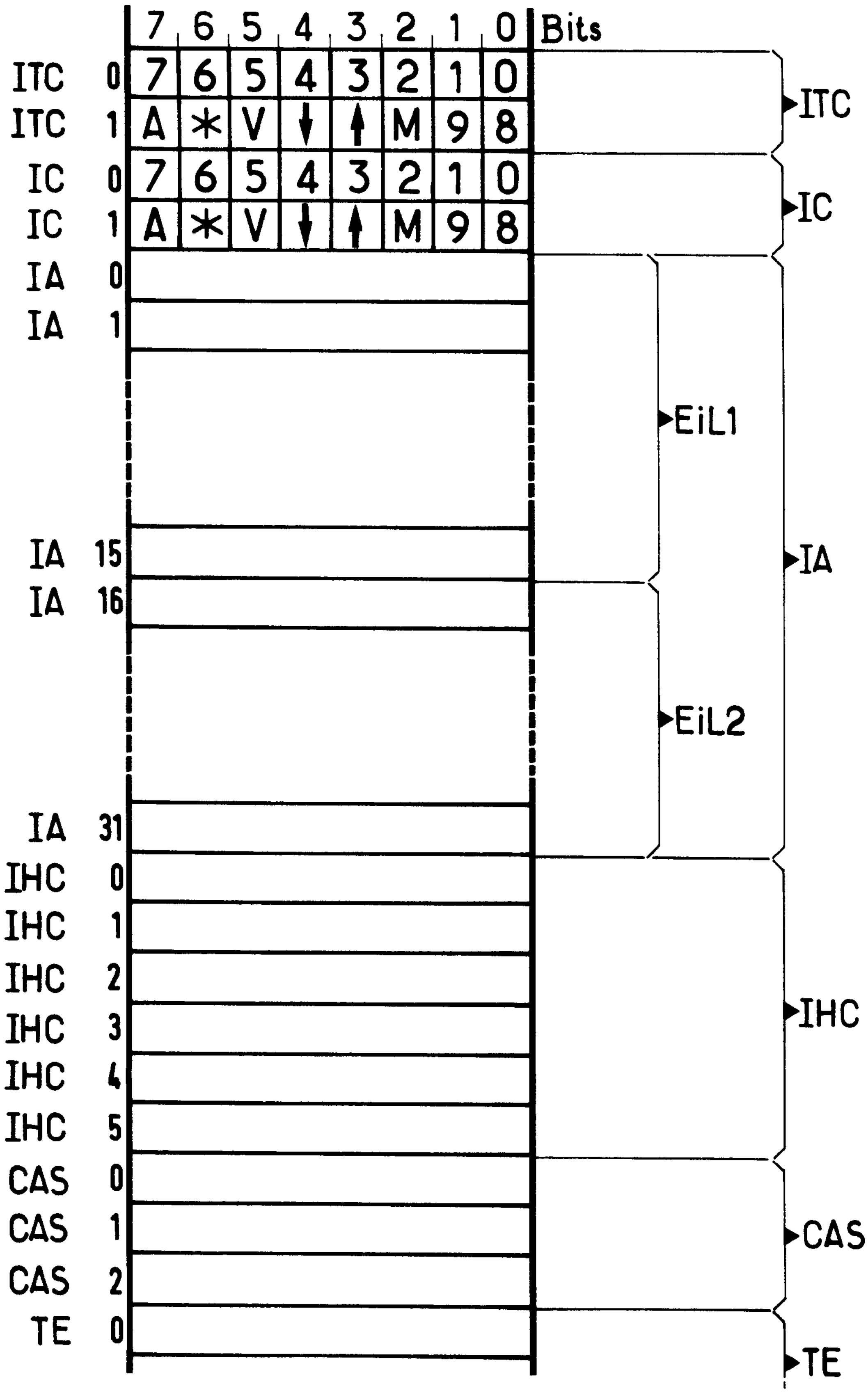

7 6 5 4 3 2 1 0 Bits
ITC 0
ITC 1
IC 0
IC 1
IA 0
IA 1
IA 15
IA 16
IA 31
IHC 0
IHC 1
IHC 2
IHC 3
IHC 4
IHC 5
CAS 0
CAS 1
CAS 2
TE 0
7 6 5 4 3 2 1 0
A * V ↓ ↑ M 9 8
ITC
IC
EiL1
EiL2
IA
IHC
CAS
TE

FIG.5

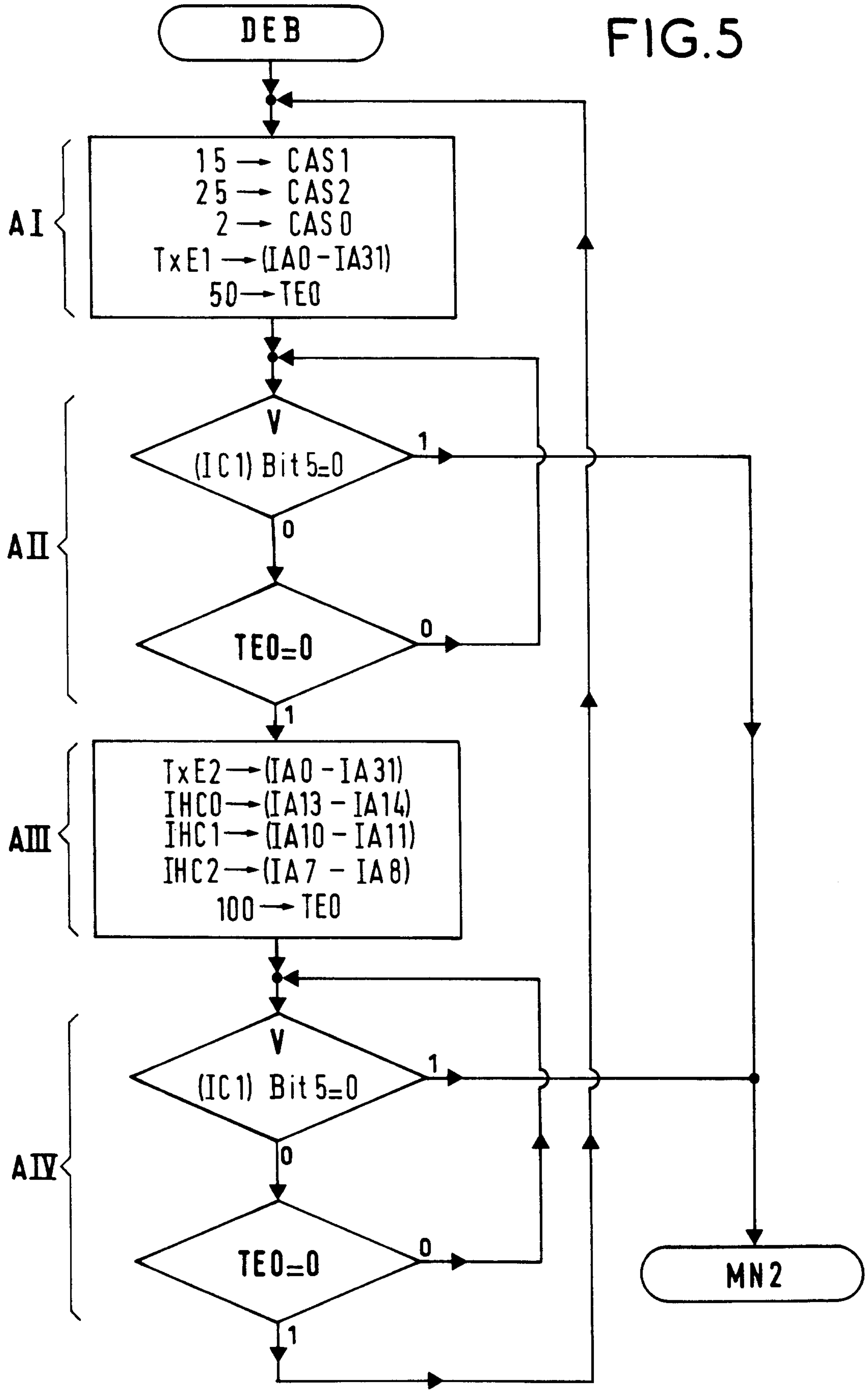
DEB
15 → CAS1
25 → CAS2
2 → CAS0
TxE1 → (IA0 - IA31)
50 → TE0
AI
V
(IC1) Bit 5=0
1
0
TE0=0
0
1
AII
TxE2 → (IA0 - IA31)
IHC0 → (IA13 - IA14)
IHC1 → (IA10 - IA11)
IHC2 → (IA7 - IA8)
100 → TE0
AIII
V
(IC1) Bit 5=0
1
0
TE0=0
0
1
AIV
MN2

FIG.6

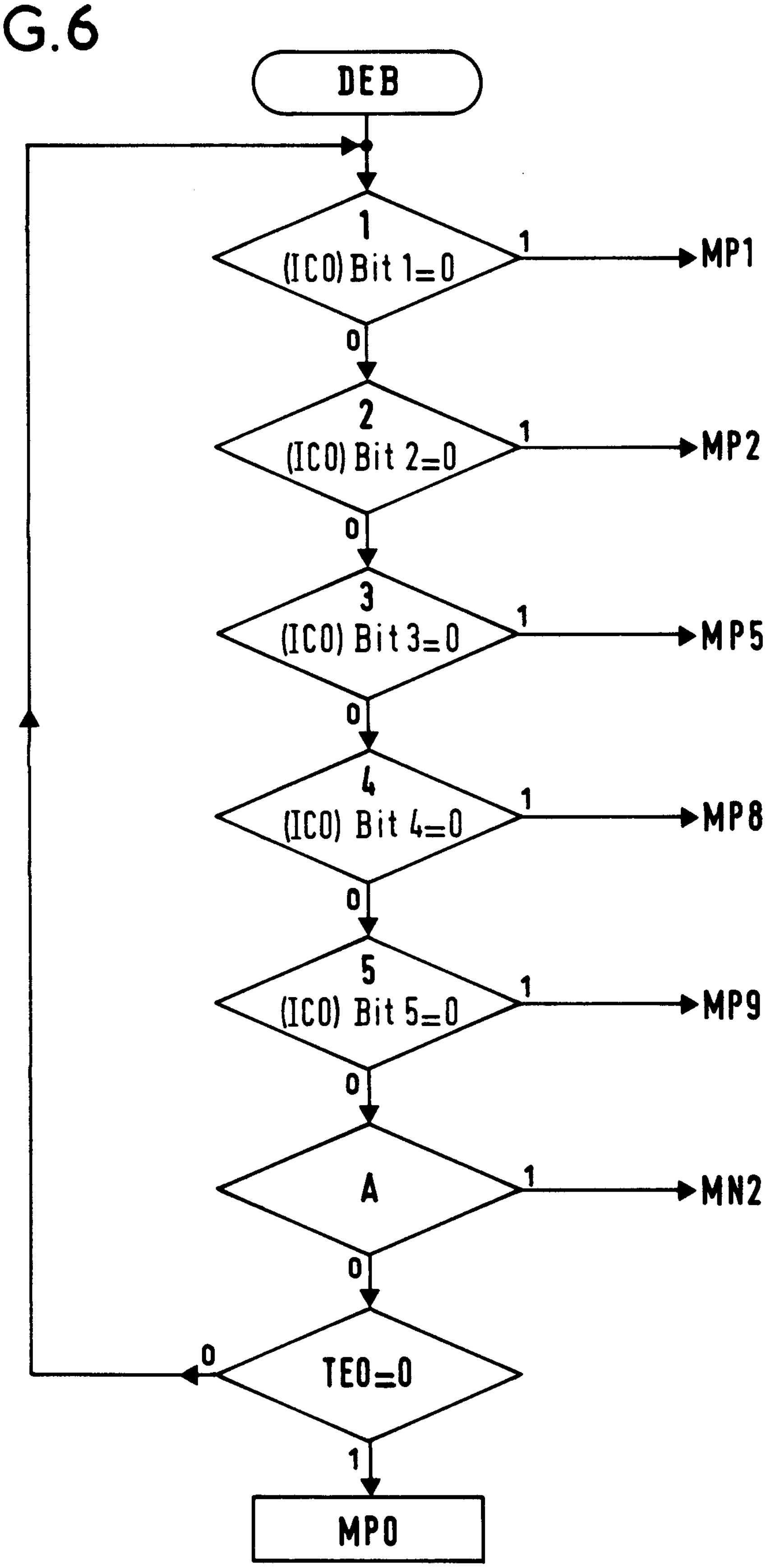
DEB
1
(ICO) Bit 1=0
1
MP1
0
2
(ICO) Bit 2=0
1
MP2
0
3
(ICO) Bit 3=0
1
MP5
0
4
(ICO) Bit 4=0
1
MP8
0
5
(ICO) Bit 5=0
1
MP9
0
A
1
MN2
0
TEO=0
0
1
MP0

FIG.7

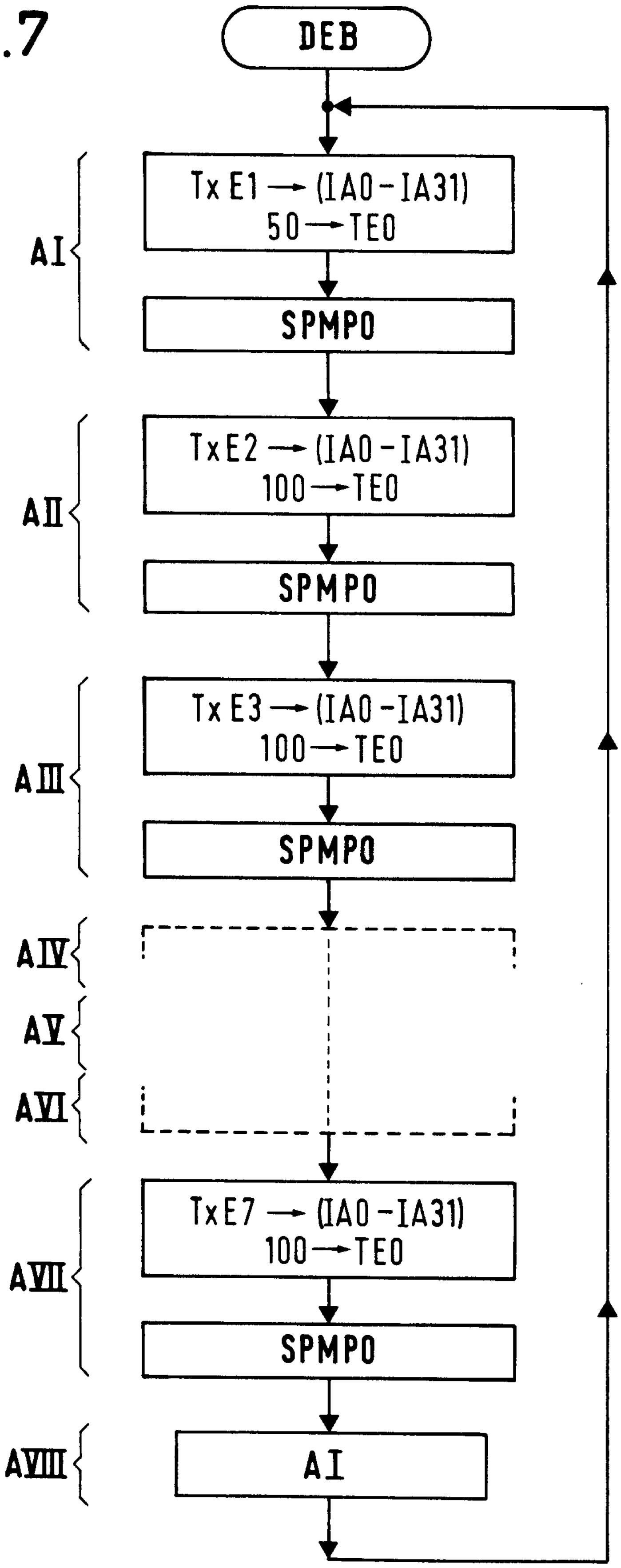
DEB
AI
TxE1 → (IA0-IA31)
50 → TE0
SPMP0
AII
TxE2 → (IA0-IA31)
100 → TE0
SPMP0
AIII
TxE3 → (IA0-IA31)
100 → TE0
SPMP0
AIV
AV
AVI
AVII
TxE7 → (IA0-IA31)
100 → TE0
SPMP0
AVIII
AI

FIG.8A

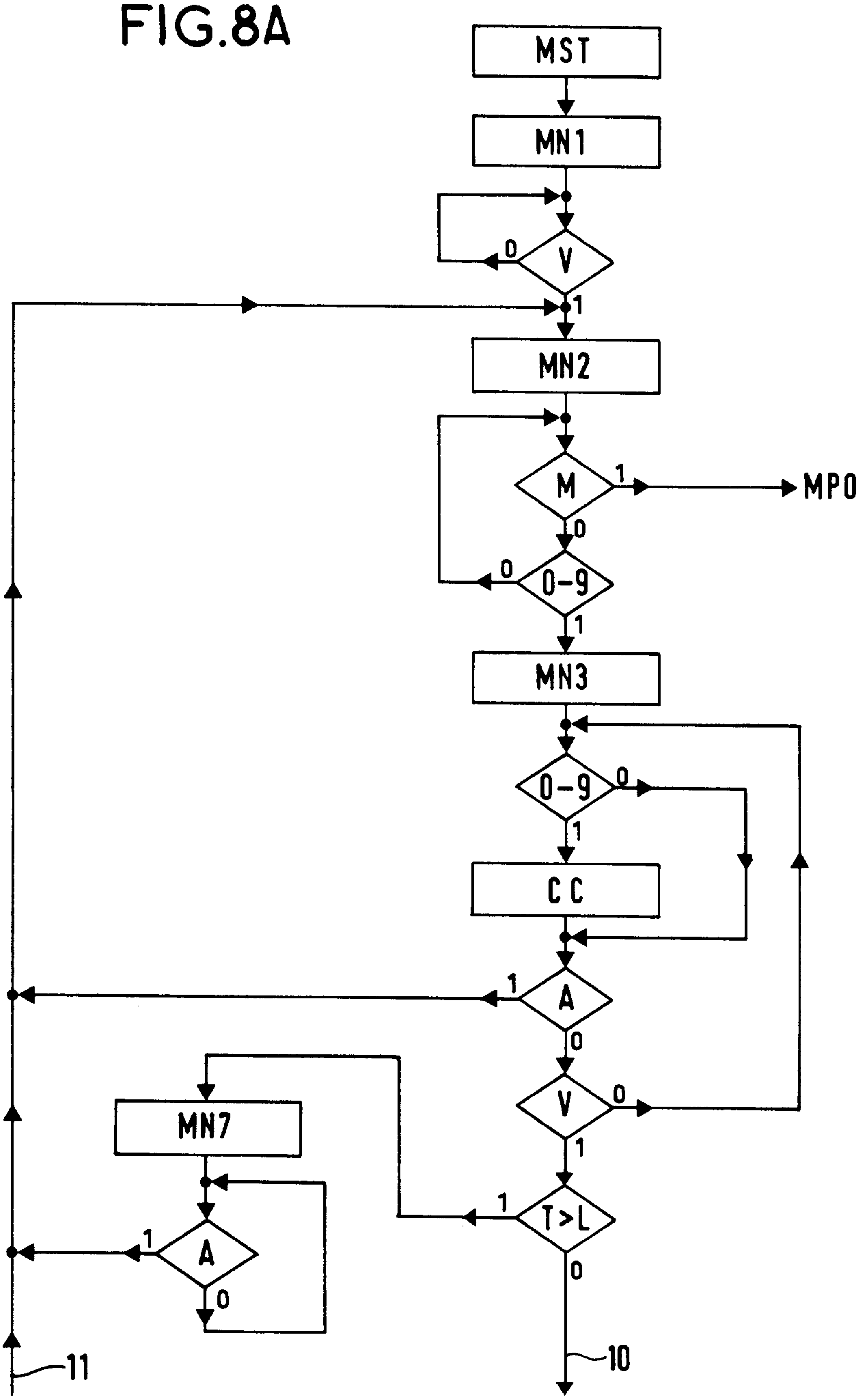
MST
MN1
V
0
1
MN2
M
1
MPO
0
0-9
0
1
MN3
0-9
0
1
CC
A
1
0
V
0
1
MN7
T>L
1
0
A
1
0
11
10

FIG.8B

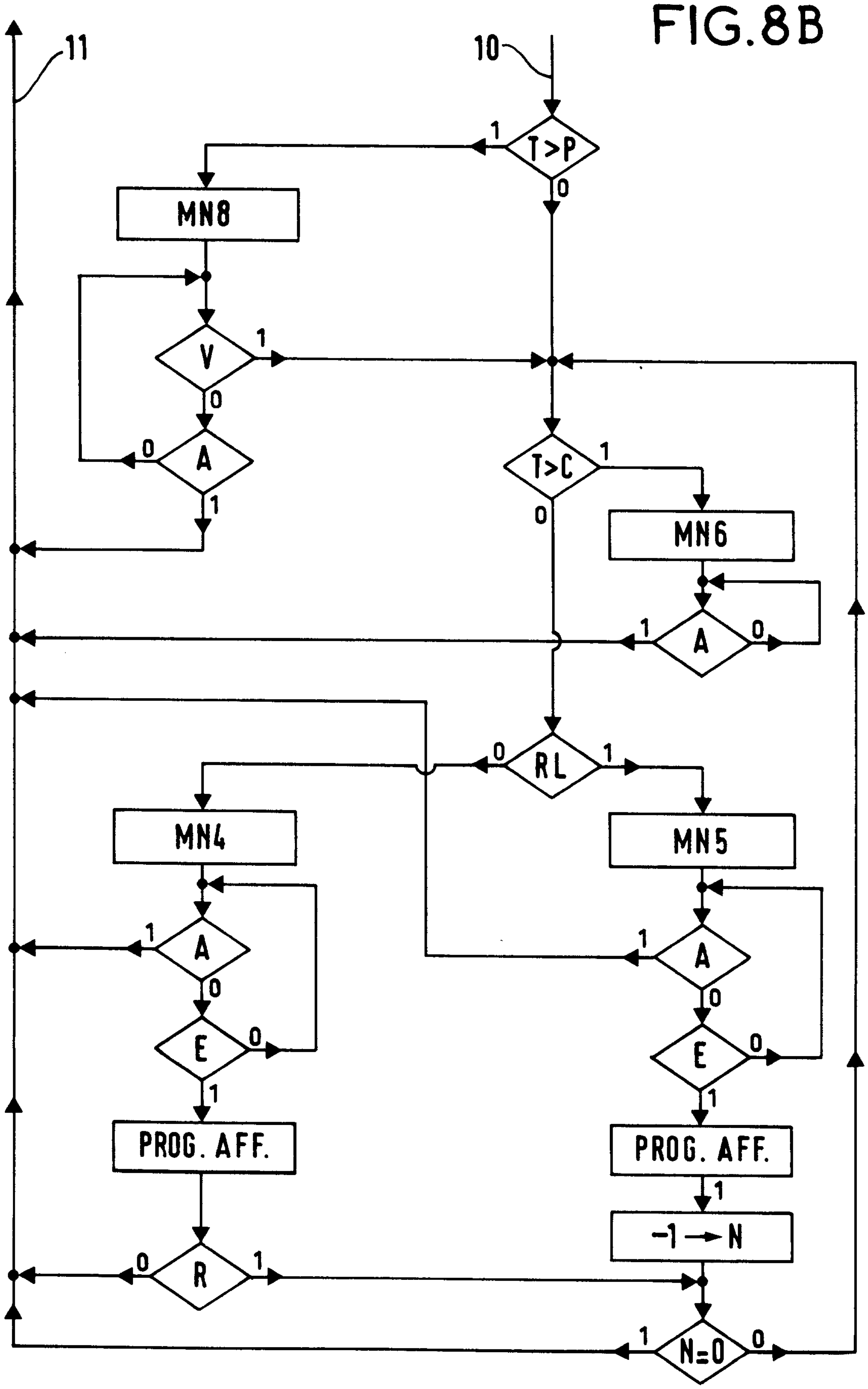

11
10
T>P
1
0
MN8
V
1
0
A
0
1
T>C
1
0
MN6
A
1
0
RL
0
1
MN4
MN5
A
1
0
E
0
1
PROG. AFF.
R
0
1
A
1
0
E
0
1
PROG. AFF.
1
-1 → N
N=0
1
0

FIG.9A

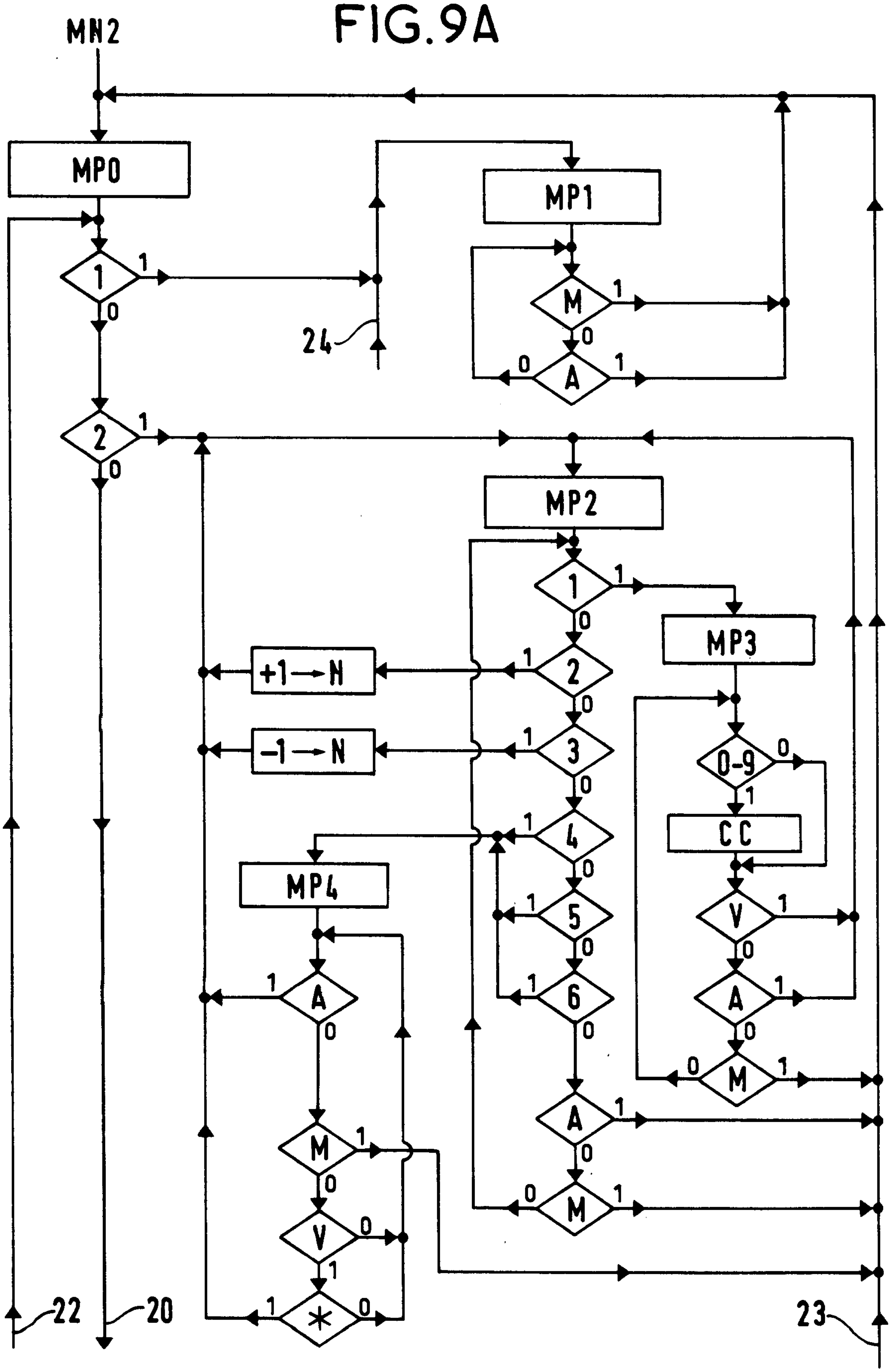
MN2
MP0
1
1
0
24
MP1
M
1
0
A
0
1
2
1
0
MP2
1
1
0
MP3
2
1
+1→N
0
3
1
-1→N
0
0-9
0
1
CC
4
1
0
MP4
5
1
0
V
1
0
6
1
0
A
1
0
A
1
0
M
0
1
A
1
0
M
1
0
M
0
1
V
0
1
*
1
0
22
20
23

FIG.9B

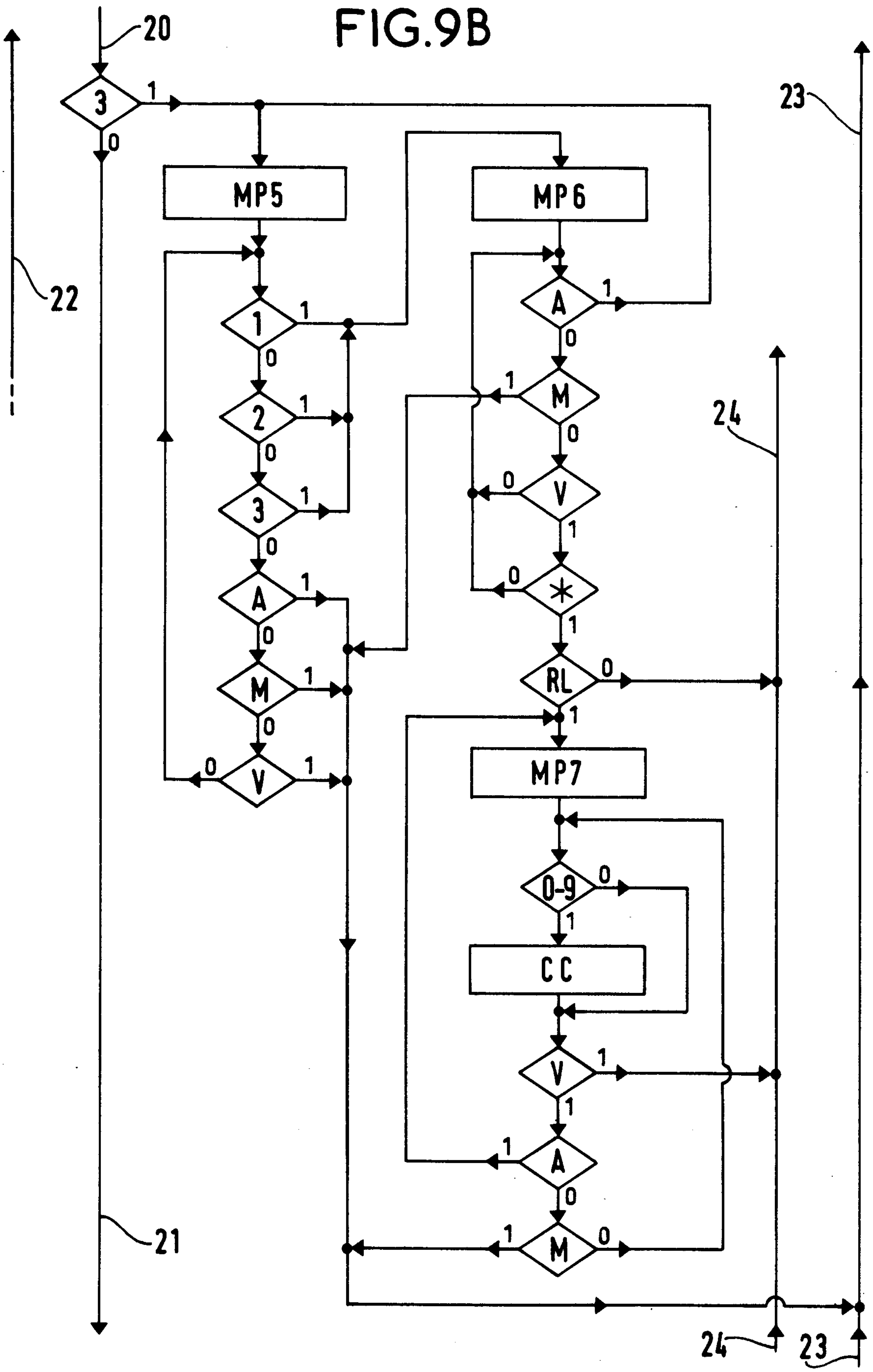

FIG.9C